# EUROPÄISCHE PATENTSCHRIFT

(11) **EP 4 137 029 B1**
(45) Veröffentlichungstag und Bekanntmachung des Hinweises auf die Patenterteilung: **14.02.2024**
(21) Anmeldenummer: 22186384.8
(22) Anmeldetag: 22.07.2022
(51) Int. Cl.: A47L 9/28, A47L 11/40, B25F 5/02

(54) **ELEKTRISCHES GERÄT, INSBESONDERE SAUGGERÄT ODER WERKZEUGMASCHINE**
ELECTRICAL DEVICE, IN PARTICULAR SUCTION DEVICE OR MACHINE TOOL
APPAREIL ÉLECTRIQUE, EN PARTICULIER APPAREIL D'ASPIRATION OU MACHINE-OUTIL

(30) Priorität: 20.08.2021 DE 102021121708; 12.11.2021 DE 102021129515
(43) Veröffentlichungstag der Anmeldung: 22.02.2023
(73) Patentinhaber: Festool GmbH, 73240 Wendlingen (DE)
(72) Erfinder: Hafenrichter, Rainer, 89290 Buch (DE); Kopf, Jan, 89073 Ulm (DE)
(74) Vertreter: Patentanwälte Bregenzer und Reule Partnerschaftsgesellschaft mbB

(56) Entgegenhaltungen:
- DE-A1-102005 007 923
- DE-A1-102010 043 577
- DE-U1-202020 105 705

## Beschreibung

Die Erfindung betrifft ein elektrisches Gerät, z.B. in Gestalt eines Sauggeräts oder einer Werkzeugmaschine und/oder als ein mobiles elektrisches Gerät, mit einem Gehäuse, in welchem mindestens ein elektrischer Verbraucher, insbesondere ein Antriebsmotor , angeordnet ist, wobei das elektrische Gerät zur elektrischen Stromversorgung des elektrischen Verbrauchers, insbesondere des Antriebsmotors, eine Stromversorgungseinrichtung mit einer Energiespeicher-Aufnahme aufweist, in deren Innenraum mindestens zwei Geräte-Schnittstellen zum lösbaren Anschluss jeweils einer Energiespeicher-Schnittstelle eines elektrischen Energiespeichers, insbesondere eines Akkupacks, angeordnet sind.

Bei den Energiespeichern handelt es sich beispielsweise um sogenannte Akkupacks, die lösbar mit dem elektrischen Gerät, also z.B. dem Sauggerät oder der Werkzeugmaschine, insbesondere eine Hand-Werkzeugmaschine, verbindbar sind. Bei elektrischen Geräten dieser Art ist zur Erhöhung der Mobilität und/oder der elektrischen Leistung notwendig, dass mehrere, beispielsweise zwei, derartige Energiespeicher gleichzeitig zur Energieabgabe bereitstehen. Jedoch ist die elektrische Leistungsdichte von wiederaufladbaren Energiespeichern noch immer so gering, dass diese relativ voluminös sind. Die Energiespeicher-Aufnahme muss dementsprechend ein großes Aufnahmevolumen aufweisen, damit die Energiespeicher noch von einem Bediener ergreifbar sind, um sie beispielsweise aus der Energiespeicher-Aufnahme herauszunehmen.

Beispiele solcher elektrische Geräte sind aus der DE 10 2010 043577 A1, DE 10 2005 007923 A1 und DE 20 2020 105705 U1 bekannt.

Es ist daher die Aufgabe der vorliegenden Erfindung, ein verbessertes Konzept zur Anordnung von Energiespeichern an einem Gehäuse eines beispielsweise mobilen oder stationären elektrischen Geräts der eingangs genannten Art bereitzustellen.

Zur Lösung der Aufgabe ist bei einem elektrischen Gerät, insbesondere dem oder einem Sauggerät oder der Werkzeugmaschine, der eingangs genannten Art vorgesehen, dass die Geräte-Schnittstellen an einander gegenüberliegenden Seitenwänden der Energiespeicher-Aufnahme angeordnet sind, sodass die Energiespeicher mit einander zugewandten Bodenwänden an den Geräte-Schnittstellen anordenbar sind.

Der Vorteil einer derartigen Anordnung ist insbesondere darin zu sehen, dass die Energiespeicher sozusagen Boden an Boden oder Bodenwand an Bodenwand angeordnet sind, sodass ein sich neben den Bodenwänden erstreckender Bereich der Energiespeicher-Aufnahme als Bedienraum zur Betätigung oder Bedienung der Energiespeicher bereitsteht. Zwar ist der Aufwand für die Verlegung elektrischer Leitungen zu den Geräte-Schnittstellen innerhalb des Gehäuses größer ist. Demgegenüber ist aber ein deutlich erhöhter Bedienkomfort vorhanden.

Vorteilhaft ist das elektrische Gerät ein mobiles elektrisches Gerät. Die Erfindung ist aber ohne weiteres auch bei stationären elektrischen Geräten anwendbar.

Die elektrischen Energiespeicher enthalten beispielsweise mehrere Batteriezellen. Die Batteriezellen sind beispielsweise in einer Reihenanordnung nebeneinander in einem Gehäuse des jeweiligen Energiespeichers angeordnet. Die Batteriezellen sind beispielsweise in Reihe und/oder parallel zueinander geschaltet.

Die elektrischen Energiespeicher sind vorzugsweise wiederaufladbare elektrische Energiespeicher. Zum Aufladen eines jeweiligen Energiespeichers ist dieser aus der Energiespeicher-Aufnahme entnehmbar. Der Energiespeicher kann beispielsweise mit seiner Energiespeicher-Schnittstelle an ein Ladegerät zum elektrischen Aufladen anschließbar sein.

Die Batteriezellen weisen beispielsweise zylindrische Gehäuse oder eine zylindrische Gestalt auf. Die Batteriezellen sind beispielsweise in einen oder mehreren Lagen innerhalb eines Energiespeicher-Gehäuses Energiespeichers angeordnet.

Die Energiespeicher-Schnittstellen des vorzugsweise mobilen elektrischen Geräts sind beispielsweise in Reihe oder parallel zueinander geschaltet, sodass beispielsweise eine Versorgungsspannung, die die Energiespeicher bereitstellen, bei einer Reihenschaltung addiert ist. Wenn die Energiespeicher-Schnittstellen parallel zueinander geschaltet sind, ist beispielsweise die bereitstehende Stromstärke höher.

Ohne weiteres können an der Energiespeicher-Schnittstelle auch weitere Energiespeicher angeordnet sein. Die weiteren Energiespeicher können ebenfalls mit einander zugewandten Bodenwänden in der oder an der Energiespeicher-Schnittstelle gehalten sein.

Es ist aber auch möglich, dass das beispielsweise stationäre oder mobile elektrische Gerät Energiespeicher-Schnittstellen aufweist, die nicht an einander gegenüberliegenden Seitenwänden der Energiespeicher-Aufnahme angeordnet sind.

Des Weiteren kann das elektrische Gerät auch mindestens ein weitere Energiespeicher-Aufnahme aufweisen, bei der beispielsweise Energiespeicher-Schnittstellen vorgesehen sind, die an zueinander entgegengesetzten Seiten einer Haltewand der Energiespeicher-Aufnahme angeordnet sind. Die mindestens eine Energiespeicher-Aufnahme kann auch nur eine einzige Energiespeicher-Schnittstelle zum Anschließen eines einzigen Energiespeichers aufweisen. Die mindestens eine weitere Energiespeicher-Aufnahmekanals Aufnahmetasche, Aufnahmefach oder dergleichen ausgestaltet sein.

Wenn das elektrisch Gerät ein mobiles elektrisches Gerät ist, behält es sozusagen seine Mobilität dadurch, dass es nicht auf eine Netzschnittstelle angewiesen ist.

Bei dem mobilen oder stationären elektrischen Gerät sind mehrere Energiespeicher, nämlich mindestens zwei Energiespeicher, für eine ausreichende Energieversorgung vorhanden.

Der elektrische Verbraucher ist vorzugsweise ein elektrischer Antriebsmotor. Das elektrische Gerät kann aber als elektrischen Verbraucher auch beispielsweise eine Ladeschnittstelle zum Aufladen eines weiteren elektrischen Energiespeichers umfassen. Beispielsweise weist das Gehäuse einen Gehäuseinnenraum auf, in welchem die Ladeschnittstelle zum Aufladen des weiteren elektrischen Energiespeichers angeordnet ist.

Bei der Werkzeugmaschine handelt es sich beispielsweise um eine Sägemaschine, Fräsmaschine oder dergleichen.

Vorteilhaft ist vorgesehen, dass die Energiespeicher-Aufnahme eine Einstecköffnung aufweist, durch die die Energiespeicher in die Energiespeicher-Aufnahme einsteckbar sind. Eine Ausdehnung der Einstecköffnung ist vorzugsweise geeignet, einen Energiespeicher in die Energiespeicher-Aufnahme einzustecken oder aus der Energiespeicher-Aufnahme herauszunehmen, während der andere Energiespeicher in der Energiespeicher-Aufnahme angeordnet ist. Vorteilhaft ist es, wenn die Einstecköffnung an einer Außenwand des Gehäuses angeordnet ist.

Nun ist es zwar prinzipiell denkbar, dass die Energiespeicher-Aufnahme an einer der Einstecköffnung gegenüberliegenden Seite eine Öffnung aufweist, sodass beispielsweise eine Art Durchgang vorhanden ist. Ein derartiger Durchgang oder eine Durchtrittsöffnung eignet sich insbesondere zur Kühlung der in der Energiespeicher-Aufnahme angeordneten Energiespeicher.

Die Energiespeicher-Aufnahme ist vorzugsweise als eine Tasche oder ein Fach an einer Außenwand des Gehäuses ausgestaltet.

Bevorzugt ist vorgesehen, dass die Energiespeicher-Aufnahme eine derartige Tiefe aufweist, dass die Energiespeicher nicht oder nur zu maximal 10% ihrer Länge vor die Energiespeicher-Aufnahme und/oder eine Außenkontur des Gehäuses vorstehen, wenn die Energiespeicher in der Energiespeicher-Aufnahme aufgenommen sind. Mithin ist es also vorteilhaft, wenn der Energiespeicher oder die Energiespeicher sozusagen vollständig in die Energiespeicher-Aufnahme eingreifen können und/oder nicht vor eine Wand, insbesondere nicht vor eine Außenwand, des Gehäuses vorstehen, an der die Energiespeicher-Aufnahme angeordnet ist.

Vorteilhaft ist vorgesehen, dass die Geräte-Schnittstellen Längsführungskonturen zum führenden Eingriff von Längsführungskonturen der Energiespeicher-Schnittstellen entlang von Steckachsen aufweisen. Die Längsführungskonturen umfassen beispielsweise Führungsnuten und Führungsvorsprünge, die sich jeweils entlang der Steckachsen erstrecken.

Die Steckachsen können zueinander parallel sein. Es ist aber auch möglich, dass die Steckachsen in einem Winkel zueinander angeordnet sind, vorzugsweise in einem kleinen Winkel von maximal 30°, insbesondere maximal 20°, besonders bevorzugt maximal 10° oder noch weiter bevorzugt maximal 5°.

Bevorzugt ist vorgesehen, dass Geräte-Schnittstellen auch Hintergreifkonturen aufweisen, die mit Gegen-Hintergreifkonturen der Energiespeicher-Schnittstellen zusammenwirken, sodass die Energiespeicher, wenn sie an den Geräte-Schnittstellen angeordnet sind, quer zu ihren jeweiligen Steckachsen formschlüssig an den Geräte-Schnittstellen gehalten sind. Beispielsweise umfassen die Hintergreifkonturen sich quer zu der jeweiligen Steckachse erstreckende Haltevorsprünge, die durch eine Schiebebetätigung parallel zur Steckachse in Eingriff oder außer Eingriff miteinander bringbar sind.

Vorteilhaft ist weiterhin, die Geräte-Schnittstellen Rasteinrichtungen zum Verrasten von Rasteinrichtungen der Energiespeicher-Schnittstellen umfassen. Die Rasteinrichtungen umfassen beispielsweise eine oder mehrere Rastaufnahmen. Die Energiespeicher-Schnittstellen weisen zu den Rasteinrichtungen der Geräte-Schnittstellen komplementäre Rasteinrichtungen auf, beispielsweise mindestens einen Rastvorsprung.

Die Geräte-Schnittstellen des elektrischen Geräts umfassen vorzugsweise Kontaktanordnungen zur Herstellung elektrischer Verbindungen zu Kontaktanordnungen der Energiespeicher-Schnittstellen der Energiespeicher. Diese Kontaktanordnungen der Geräte-Schnittstellen und/oder der Energiespeicher-Schnittstellen umfassen beispielsweise Energieversorgungskontakte und/oder Datenkontakte.

Die Kontaktanordnungen umfassen beispielsweise Federkontakte, Kontaktzungen oder dergleichen.

Vorzugweise ist vorgesehen, dass die Kontaktanordnungen der Energiespeicher-Schnittstellen und der Geräte-Schnittstellen in elektrischen Kontakt miteinander gelangen, wenn die Energiespeicher an die Geräte-Schnittstellen angesteckt werden.

Vorteilhaft ist es, wenn sämtliche Kontakte einer Kontaktanordnung einer Geräte-Schnittstelle an derjenigen Seitenwand und/oder an einer einzigen Seitenwand angeordnet sind, an der die Geräte-Schnittstelle angeordnet ist.

Die Energieversorgungskontakte dienen zur elektrischen Energieversorgung des mindestens einen elektrischen Verbrauchers, insbesondere des Antriebsmotors, des elektrischen Geräts.

Die Datenkontakte der Geräte-Schnittstellen dienen zu einer Datenübertragung von dem Energiespeicher zu dem elektrischen Gerät und/oder umgekehrt. Die Datenkontakte sind z.B mit einer Steuerung des elektrischen Geräts verbunden, über welches die Steuerung des elektrischen Geräts beispielsweise Informationen über einen Ladezustand und/oder einer Spannung des jeweiligen Energiespeichers von dem Energiespeicher erhält. Der Energiespeicher kann ebenfalls eine Steuerung umfassen.

Eine jeweilige Steuerung des Energiespeichers und/oder des elektrischen Geräts umfasst beispielsweise einen oder mehrere Prozessoren sowie Speicher, in welchem zum Beispiel bei dem elektrischen Gerät ein Steuerungsprogramm zur Ansteuerung des elektrischen Geräts und bei dem Energiespeicher ein Steuerungsprogramm zur Steuerung des Energiespeichers, beispielsweise eines Ladeprogramms, gespeichert ist. Die jeweilige Steuerung von elektrischem Gerät oder Energiespeicher ist zur Ausführung von Programmcode des jeweiligen Steuerprogramms ausgestaltet.

Die Energiespeicher-Aufnahme kann beispielsweise an einer sich zwischen den Seitenwänden erstreckenden Seite offen sein. Bevorzugt ist jedoch die Energiespeicher-Aufnahme durch Umfangswände vollständig umgeben. Die Umfangswände erstrecken sich von der Einstecköffnung in einen Innenraum des Gehäuses hinein.

Vorzugweise ist vorgesehen, dass die Energiespeicher-Aufnahme sich zwischen den einander gegenüberliegenden Seitenwänden erstreckende Verbindungswände aufweisen, die einen Innenraum zur Aufnahme der Energiespeicher begrenzen. Die Verbindungswände sind z.B. Deckenwände oder Bodenwände. Die Verbindungswände sowie die Seitenwände bilden beispielsweise Umfangswände der Energiespeicher-Aufnahme.

Vorteilhaft ist es, wenn zwischen mindestens einer Verbindungswand und dem diesem gegenüberliegenden Energiespeicher, wenn der Energiespeicher in der Energiespeicher-Aufnahme aufgenommen ist, ein Bedienraum zum Ergreifen des Energiespeichers vorgesehen ist somit kann beispielsweise der Energiespeicher seitlich ergriffen und/oder betätigt werden.

Bevorzugt ist vorgesehen, dass der Bedienraum eine ein einem Finger einer erwachsenen Person aufweisende Breite und/oder eine Breite von mindestens 1,5 cm, vorzugsweise mindestens 2 cm, aufweist. Der Bediener kann also mit seinen Fingern in den Bedienraum eingreifen, zum Beispiel um den jeweiligen Energiespeicher mit einem klammerartigen Griff zu ergreifen.

Durch die sozusagen Boden an Boden in der Energiespeicher-Aufnahme aufgenommenen Energiespeicher ist auch die nachfolgende vorteilhafte ohne weiteres umsetzbar Ausgestaltung möglich.

Bevorzugt ist vorgesehen, dass sich der Bedienraum durchgängig zwischen den Seitenwänden der Energiespeicher-Aufnahme erstreckt der Bedienraum weist vorzugsweise zwischen den Seitenwänden ein gleichbleibende Höhe auf. Es ist aber auch möglich, dass der Bedienraum im Bereich der Bodenwände oder nahe bei den Bodenwänden eine größere Breite aufweist als nahe bei den Seitenwänden. Auch dann ist es ohne weiteres möglich, dass ein Bediener in den Bedienraum eingreift, um wahlweise den einen oder den anderen Energiespeicher oder beide Energiespeicher gleichzeitig zu betätigen.

Ein vorteilhaftes Konzept sieht vor, dass zwischen jeder Verbindungswand und dem ihr gegenüberliegenden Energiespeicher ein Bedienraum angeordnet ist, durch den der Energiespeicher an einander entgegengesetzten Längsseiten klammerartig ergreifbar ist, wenn der Energiespeicher in der Energiespeicher-Aufnahme aufgenommen ist. Gerade bei dieser Ausgestaltung ist ein klammerartiger Griff zum Ergreifen der Energiespeicher ohne weiteres möglich.

So sieht eine bevorzugte Ausgestaltung vor, dass zwischen jeder Verbindungswand und dem ihr gegenüberliegenden Energiespeicher ein Bedienraum angeordnet ist, durch den der Energiespeicher an einander entgegengesetzten Längsseiten klammerartig ergreifbar ist, wenn der Energiespeicher in der Energiespeicher-Aufnahme aufgenommen ist. Beispielsweise kann der Bediener den Energiespeicher zangenartigen oder klammerartig ergreifen und aus der Energiespeicher-Aufnahme herausziehen.

Weiterhin vorteilhaft ist es, wenn der Energiespeicher an mindestens einer Längsseite, die in die Energiespeicher-Aufnahme eingreift, wenn der Energiespeicher in der Energiespeicher-Aufnahme aufgenommen ist, ein Bedienelement aufweist, durch dessen Betätigung der Energiespeicher von der Geräte-Schnittstelle in der Energiespeicher-Aufnahme lösbar ist. Das Bedienelement dient beispielsweise zum Verstellen der Rasteinrichtung des Energiespeichers aus der den Energiespeicher an der Geräte-Schnittstelle haltenden Raststellung in eine Rast-Lösestellung, in der der Energiespeicher von der Geräte-Schnittstelle lösbar ist, beispielsweise durch eine Zug-Betätigung entlang der Steckachse.

Vorteilhaft ist es, wenn an einander entgegengesetzten Seiten, insbesondere Längsseiten, des Energiespeichers jeweils ein derartiges Bedienelement angeordnet ist.

Eine bevorzugte Ausführungsform sieht vor, dass elektrisches Gerät ein Sauggerät bildet. In diesem Fall bildet das Gehäuse ein Sauggerät-Gehäuse bildet, in dessen Innenraum eine Saugturbine zur Erzeugung eines Saugstroms angeordnet ist, wobei das Sauggerät-Gehäuse einen Saugeinlass zum Einlassen des Saugstroms und einen Staubsammelraum zum Sammeln von in dem Saugstrom enthaltenen Staub aufweist, wobei zwischen dem Staubsammelraum und einer Saugturbine-Einströmöffnung der Saugturbine ein Filterelement zum Zurückhalten von Staub in dem Staubsammelraum angeordnet ist.

Die Einstecköffnung ist vorteilhaft an einer sich zwischen einer Bodenwand und einer Deckwand erstreckenden Außenwand des Gehäuses, insbesondere Sauggerät-Gehäuses, des elektrischen Geräts angeordnet.

Vorzugsweise ist das beispielsweise als Sauggerät-Gehäuse ausgestaltete Gehäuse des elektrischen Geräts als ein zur Bildung eines in Richtung einer Stapelachse erstreckenden Gehäusestapels ausgebildetes Stapelgehäuse ausgestaltet, unter welches mindestens ein Stapelbehälter unterstapelbar und/oder auf welches mindestens ein Stapelbehälter aufstapelbar ist. Der Stapelbehälter ist beispielsweise ein weiteres Sauggerät. Es ist aber auch möglich, dass der Stapelbehälter beispielsweise einen Transportbehälter für eine Werkzeugmaschine, insbesondere für eine abrasiv und/oder schneidend arbeitenden Werkzeugmaschine, zum Beispiel eine Schleifmaschine oder Sägemaschine ist. Der dann beim Betrieb der Schleifmaschine oder Sägemaschine anfallende Staub oder anfallende Partikel können anhand des Sauggeräts aufgesaugt werden.

Es ist zwar möglich, das Gehäuse des elektrischen Geräts auf einen Stapelbehälter sozusagen lose aufzustapeln oder ein Stapelbehälter auf das Gehäuse des elektrischen Geräts aufzustapeln. Das Stapelgehäuse und der weitere Stapelbehälter können aber anhand von an dem Stapelgehäuse des Staubsaugers und dem Stapelbehälter angeordneter Formschlusskonturen optional formschlüssig ineinander eingreifen, sodass sie quer zu der Stapelachse formschlüssig aneinander halten. Dazu können beispielsweise Füße am einen Stapelbehälter oder Stapelgehäuse und Aufnahmen für die Füße am anderen, die Füße stützenden oder aufnehmenden Stapelbehälter oder Stapelgehäuse angeordnet sein, die formschlüssig ineinander eingreifen.

Vorteilhaft ist bei dem elektrischen Gerät, insbesondere dem Sauggerät, vorgesehen, dass es Koppelmittel zum Koppeln seines Gehäuses mit einem entlang der Stapelachse aufgestapelten oder untergestapelten Stapelbehälter aufweist, wobei die Koppelmittel des elektrischen Geräts das Gehäuse zur Zusammenwirkung mit Koppelmitteln des Stapelbehälters ausgestaltet sind, sodass das Gehäuse mit dem Stapelbehälter quer zur Stapelachse und parallel zur Stapelachse anhand der Koppelmittel fest verbunden ist. Die Koppelmittel umfassen vorteilhaft am Stapelbehälter und Stapelgehäuse angeordnete Hintergreifkonturen, die quer zur Stapelachse in Eingriff und außer Eingriff ineinander bringbar sind. Ferner können die Koppelmittel beispielsweise eines oder mehrere Verriegelungselemente, insbesondere mindestens einen Schwenkriegel und mindestens einen Verriegelungsvorsprung, mit dem der Schwenkriegel in Eingriff bringbar ist, umfassen.

Vorteilhaft umfasst das elektrische Gerät, insbesondere das Sauggerät, einen Behälteraufsatz, der entlang der Stapelachse als ein Stapelbehälter auf das Gehäuse aufstapelbar oder unter das Gehäuse unterstapelbar ist, wobei der Behälteraufsatz und das Gehäuse die Koppelmittel zum festen Koppeln des Gehäuses mit dem Behälteraufsatz parallel und quer zur Stapelachse aufweisen, und wobei der Behälteraufsatz einen Aufnahmeraum für mindestens eine Komponente, insbesondere einen Saugschlauch, des elektrischen Geräts oder des Sauggeräts aufweist.

Der Behälteraufsatz weist vorzugsweise eine Durchtrittsöffnung auf, die mit dem Saugeinlass des Sauggerät-Gehäuses fluchtet, wenn der Behälteraufsatz auf dem Sauggerät-Gehäuse angeordnet ist, wobei die Durchtrittsöffnung zum Durchstecken und/oder Einstecken eines Saugschlauches vorgesehen und ausgestaltet ist.

Das Sauggerät weist vorteilhaft einen in dem Staubsammelraum angeordneten oder den Staubsammelraum bereitstellenden, aus dem Sauggerät-Gehäuse entnehmbaren, insbesondere in der Art einer Kassette ausgestalteten, Staubsammelbehälter auf. Wenn der Staubsammelbehälter in dem Gehäuse aufgenommen ist, liegt er dem Saugeinlass gegenüber. Somit kann strömt der über den Saugeinlass einströmende Saugstrom in den Staubsammelraum des Staubsammelbehälters.

Ein zur Stromversorgung vorgesehener Energiespeicher umfasst vorzugsweise ein Energiespeicher-Gehäuse, in dessen Innenraum eine Anordnung von Batteriezellen zur Bereitstellung elektrischer Energie angeordnet ist.

An dem Gehäuse des elektrischen Geräts ist mindestens eine Geräte-Schnittstelle zur lösbaren Verbindung mit einer Energiespeicher-Schnittstelle des Energiespeichers vorgesehen, wobei die Geräte-Schnittstelle und die Energiespeicher-Schnittstelle Kontaktanordnungen zum Herstellen elektrischer Verbindungen über die Schnittstellen, also die Geräte-Schnittstelle und die Energiespeicher-Schnittstelle, umfassen.

Das Energiespeicher-Gehäuse weist beispielsweise Längsseitenwände auf, die sich zwischen Stirnseitenwänden erstrecken. Die Längsseitenwände und die Stirnseitenwände sind beispielsweise zwischen einer Bodenwand und einer Schnittstellenwand, die einander gegenüberliegen, angeordnet und begrenzen mit diesen Wänden zusammen einen Innenraum des Energiespeicher-Gehäuses.

An der Schnittstellenwand ist eine jeweilige Energiespeicher-Schnittstelle des Energiespeichers angeordnet, mit der der Energiespeicher an eine jeweilige Geräte-Schnittstelle des elektrischen Geräts anschließbar ist.

An der Bodenwand und/oder den Längsseitenwänden und/oder den Stirnseitenwände sind vorzugsweise keine elektrischen Kontakte vorgesehen. Vorteilhaft weist der Energiespeicher nur an der Schnittstellenwand elektrische Kontakte auf. Im in der Energiespeicher-Aufnahme aufgenommenen Zustand liegen die Bodenwände der Energiespeicher-Gehäuse vorteilhaft einander gegenüber.

Es ist vorteilhaft, wenn sich die Bodenwände von in der Energiespeicher-Aufnahme aufgenommenen Energiespeichern parallel zueinander erstrecken und/oder mit ihren Flachseiten einander gegenüberliegen.

Die Energiespeicher-Aufnahme weist wie erwähnt vorteilhaft einander gegenüberliegende Seitenwände auf. Die Schnittstellenwand eines Energiespeichers liegt vorzugsweise einer diese Seitenwände der Energiespeicher-Aufnahme gegenüber, wenn der Energiespeicher in der Energiespeicher-Aufnahme aufgenommen ist. Weiterhin erstrecken sich vorteilhaft zwischen den einander gegenüberliegenden Seitenwänden Verbindungswände. Die Längsseitenwände des Energiespeicher-Gehäuses liegen vorteilhaft diesen Verbindungswänden gegenüber, wenn der Energiespeicher in der Energiespeicher-Aufnahme aufgenommen ist.

Der Energiespeicher umfasst vorteilhaft einen Ventilator zur Erzeugung eines Kühlluftstroms, welche über eine Energiespeicher-Einströmöffnung in das Energiespeicher-Gehäuse einströmen und über eine Energiespeicher-Ausströmöffnung aus dem Energiespeicher-Gehäuse ausströmen kann.

Nachfolgend wird ein Ausführungsbeispiel der Erfindung anhand der Zeichnung erläutert. Es zeigen:

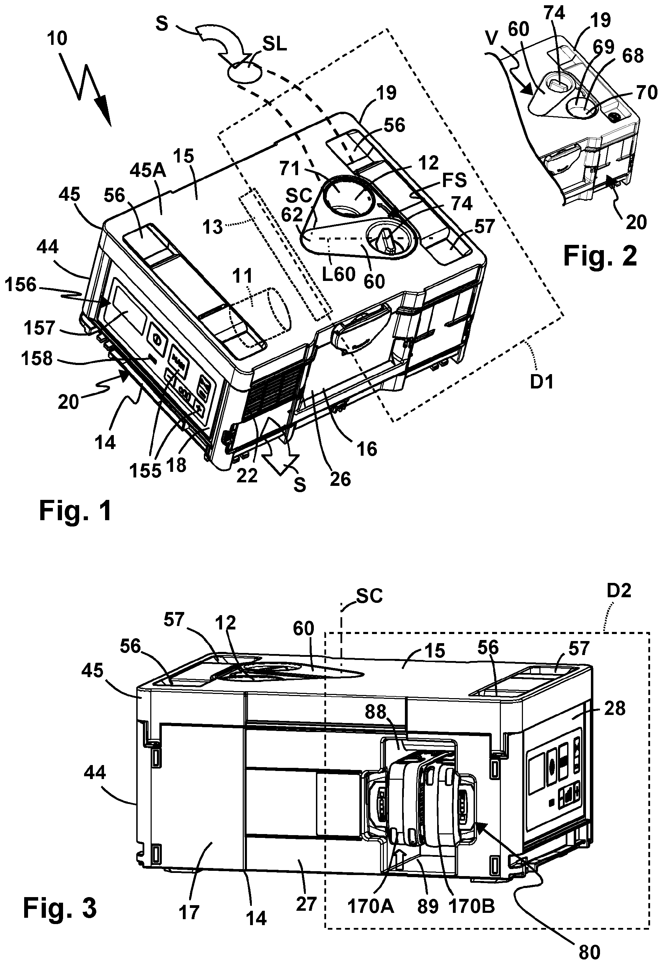

- Figur 1: eine perspektivische Schrägansicht eines Sauggeräts von oben, wobei ein Saugeinlass des Sauggeräts offen ist,
- Figur 2: einen vorderen Teil des Sauggeräts gemäß Figur 1 etwa entsprechend einem Detail D1 in Figur 1, wobei der Saugeinlass durch ein Verschlusselement verschlossen ist,
- Figur 3: perspektivische Rückansicht des Sauggeräts gemäß Figuren 1, 2,
- Figur 4: das Sauggerät gemäß vorstehender Figuren mit geöffnetem Sauggerät-Gehäuse und einem entfernten Staubsammelbehälter in perspektivischer Schrägansicht von vorn,
- Figur 5: die Anordnung gemäß Figur 4, wobei der Staubsammelbehälter im Sauggerät-Gehäuse des Sauggeräts aufgenommen ist,
- Figur 6: das Sauggerät gemäß vorstehender Figuren mit einem Behälteraufsatz perspektivisch schräg von vorn,

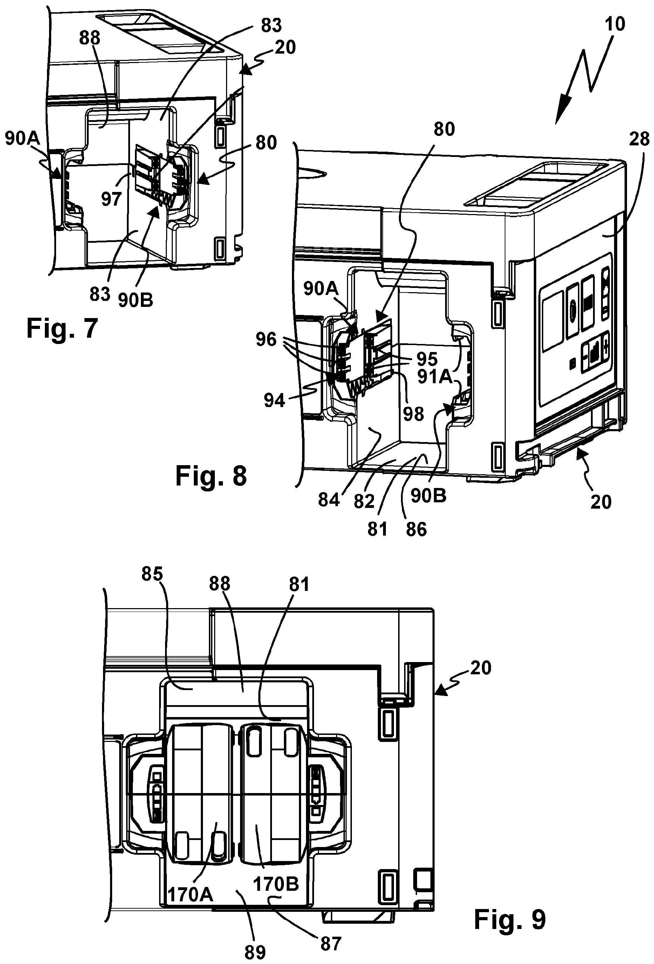

- Figur 7: eine perspektivische Teil-Rückansicht des Sauggeräts gemäß Figur 3, mit entnommenen Energiespeichern, etwa entsprechend einem Ausschnitt D2 in Figur 3,
- Figur 8: den in Figur 7 dargestellten Teil des Sauggeräts, jedoch mit anderer Schrägperspektive,
- Figur 9: den in Figur 7 und 8 dargestellten Teil des Sauggeräts in Frontalansicht mit Energiespeichern,

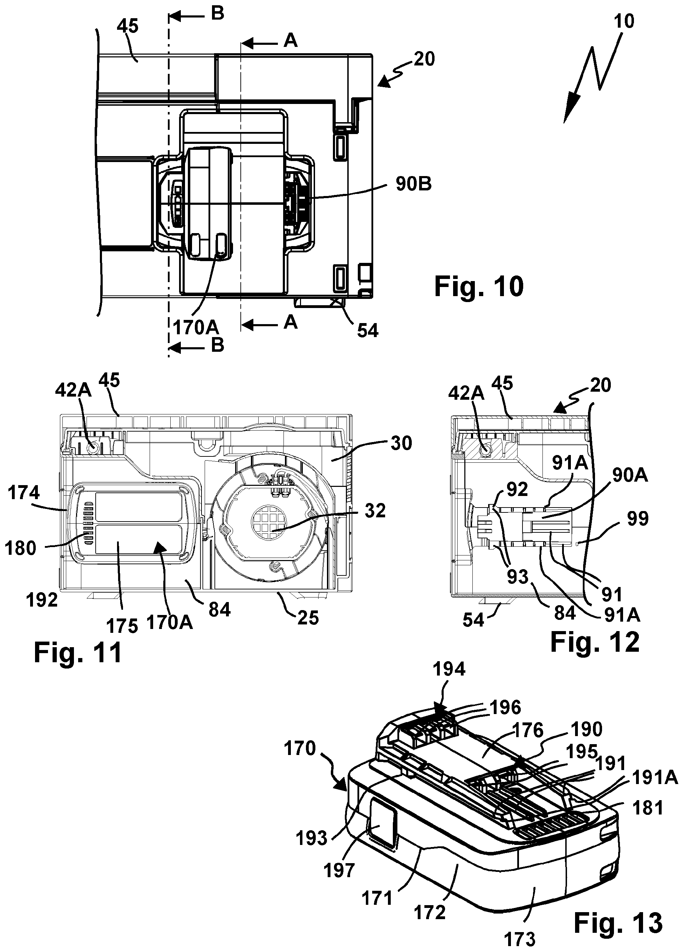

- Figur 10: die Ansicht entsprechend Figur 9, jedoch mit nur einem Energiespeicher,
- Figur 11: einen Schnitt durch das Sauggerät gemäß Figur 10, etwa entlang einer Schnittlinie A-A in Figur 10,
- Figur 12: einen Schnitt durch das Sauggerät gemäß Figur 10, etwa entlang einer Schnittlinie B-B in Figur 10,
- Figur 13: eine perspektivische Schrägansicht eines Energiespeichers des Sauggeräts,

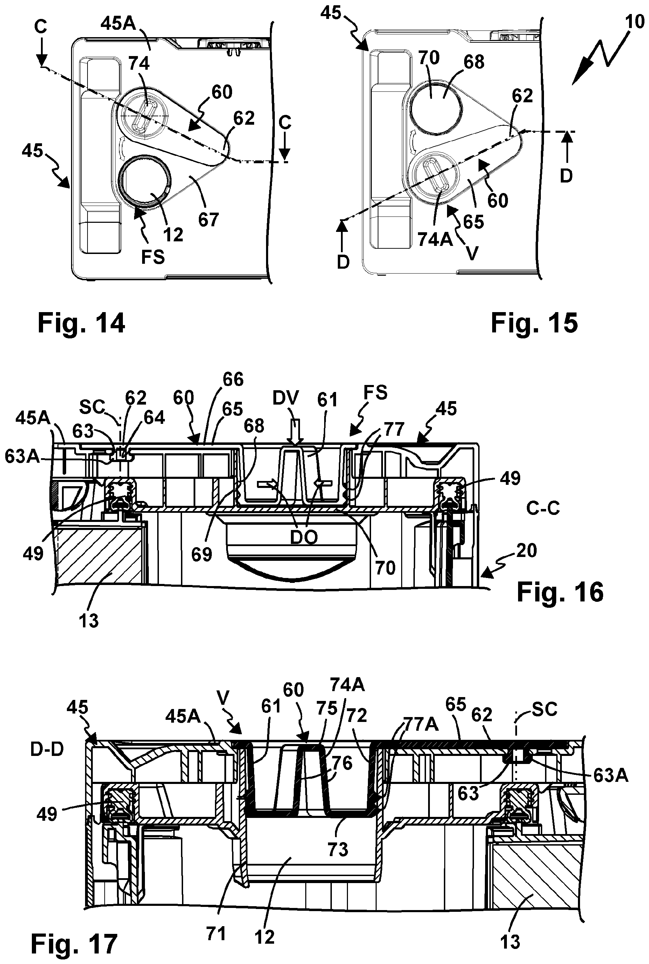

- Figur 14: eine frontale Ansicht des Sauggeräts von oben, etwa dem Ausschnitt D1 in Figur 1 entsprechend, wobei wie in Figur 1 der Saugeinlass offen ist,
- Figur 15: die Ansicht entsprechend Figur 14, wobei der Saugeinlass durch das Verschlusselement verschlossen ist,
- Figur 16: einen Schnitt durch die Ansicht der Figur 14, etwa entlang einer Schnittlinie C-C in Figur 14,
- Figur 17: einen Schnitt durch die Ansicht gemäß Figur 15, etwa entlang einer Schnittlinie D-D in Figur 15,

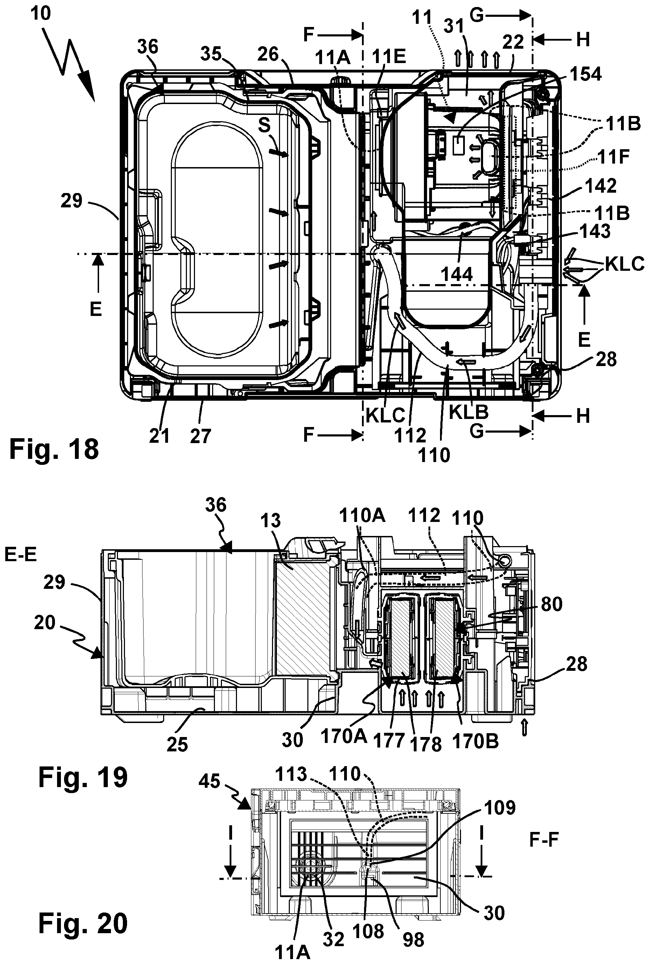

- Figur 18: eine frontale Ansicht von oben auf ein offenes Unterteil des Sauggeräts gemäß vorstehender Figuren,
- Figur 19: einen Schnitt etwa entlang einer Schnittlinie E-E durch das Unterteil des Sauggeräts gemäß Figur 18,
- Figur 20: einen Schnitt durch das Sauggerät, etwa entlang einer Schnittlinie F-F in Figur 18,

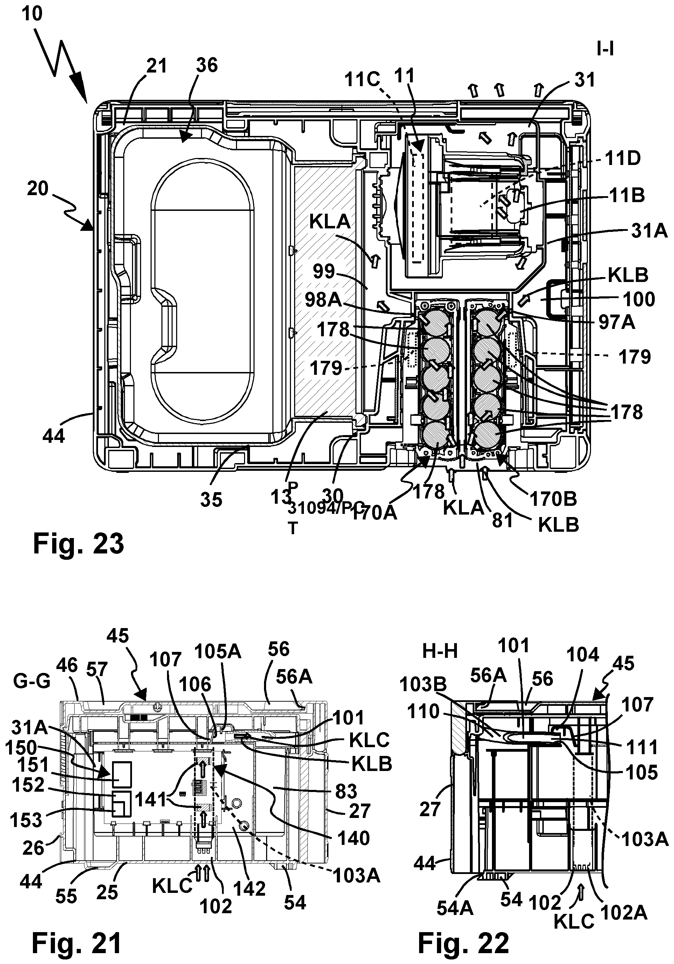

- Figur 21: einen Schnitt durch das Sauggerät, etwa entlang einer Schnittlinie G-G in Figur 18,
- Figur 22: einen Schnitt durch das Sauggerät, etwa entlang einer Schnittlinie H-H in Figur 18,
- Figur 23: einen Schnitt durch den Teil des Sauggeräts gemäß Figuren 18 bis 22, etwa entlang einer Schnittlinie I-I in Figur 20,

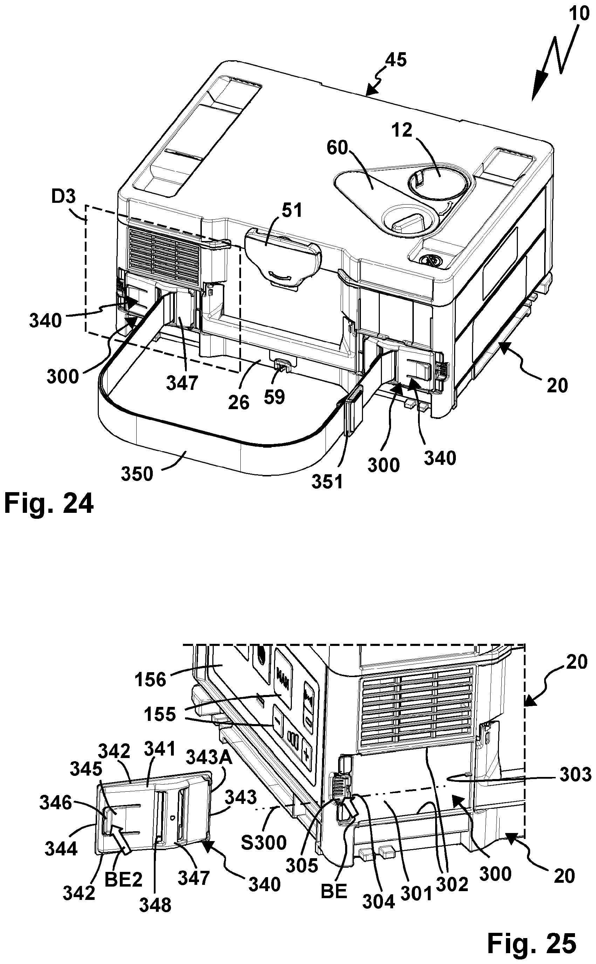

- Figur 24: das Sauggerät gemäß vorstehender Figuren mit einem Tragegurt,
- Figur 25: ein Detail D3 aus Figur 24, jedoch mit entferntem Tragegurt und einer Befestigungseinrichtung des Traggurts,

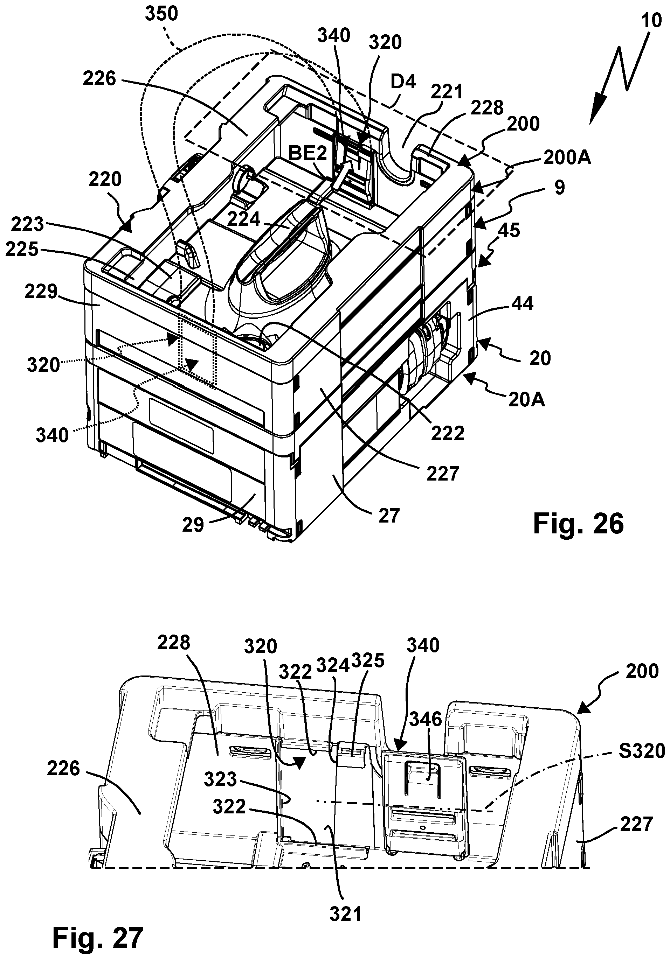

- Figur 26: das Sauggerät gemäß vorstehender Figuren mit Behälteraufsatz in perspektivischer Schrägansicht, wobei der schematisch dargestellte Tragegurt am Behälteraufsatz befestigt ist,
- Figur 27: ein Detail D4 aus Figur 26, wobei die Befestigungseinrichtung des Traggurts in einer Lösestellung dargestellt ist,
- Figur 28: eine Kennlinie eines Volumenstroms durch die Saugturbine des Sauggeräts, und
- Figur 29: Motorkennlinien eines Antriebsmotors der Saugturbine.

Ein Sauggerät 10 weist ein Sauggerät-Gehäuse 20 auf, in dem eine Saugturbine 11 des Sauggeräts 10 aufgenommen ist. Mit der Saugturbine 11 ist ein Saugstrom S erzeugbar, der durch einen Saugeinlass 12 in das Sauggerät-Gehäuse 20 einströmen kann. An den Saugeinlass 12 ist ein Saugschlauch SL anschließbar.

Der Saugstrom S durchströmt einen Staubsammelraum 21 des Sauggerät-Gehäuses 20, in welchem in dem Saugstrom S enthaltene Partikel, beispielsweise Staub, gesammelt werden können. Zwischen der Saugturbine 11 und dem Staubsammelraum 13 ist ein Filterelement 13, beispielsweise ein Plattenfilter, angeordnet, so dass in dem Saugstrom S enthaltene Partikel in dem Staubsammelraum 21 zurückgehalten werden. Stromabwärts des Filterelements 13 durchströmt der Saugstrom S die Saugturbine 11 und strömt über einen Luftauslass 22 aus dem Sauggerät-Gehäuse 20 aus.

Das Sauggerät 10 ist ein zum Beispiel mobiles elektrisches Gerät, das bequem an seinen Einsatzort gebracht werden kann. Das Sauggerät-Gehäuse 20 ist z.B. kistenförmig und kompakt. Ohne weiteres können jedoch die nachfolgend erläuterten Merkmale und Ausgestaltungen auch bei einem stationären elektrischen Gerät Anwendung finden.

Das Sauggerät 10 kann mit seiner Unterseite 14 auf einem Untergrund abgestellt werden. Der Saugeinlass 12 ist an einer zur Unterseite 14 entgegengesetzten Oberseite 15 des Sauggeräts 10 angeordnet. Zwischen der Unterseite 14 und der Oberseite 15 weist das Sauggerät 10 oder dessen Sauggerät-Gehäuse 20 längere Längsseiten 16 und 17 auf, von denen die Längsseite 16 beispielsweise eine Vorderseite und die Längsseite 17 eine Rückseite des Sauggeräts 10 bilden.

In einem Gehäuseinnenraum 23 des Sauggerät-Gehäuses 20 sind der Staubsammelraum 21 und ein Saugturbinenteil 24 vorgesehen, in welchem die Saugturbine 11 aufgenommen ist.

Das Sauggerät-Gehäuse 20 umfasst eine Bodenwand 25, von der Umfangswände abstehen, nämlich vordere und hintere Längsseitenwände 26, 27 an den Längsseiten 16 und 17 sowie sich zwischen den Längsseitenwänden 26 und 27 erstreckende Längsseitenwände 28 und 29 an den Längsseiten 18 und 19, die insgesamt den Gehäuseinnenraum 23 umschließen.

Zwischen dem Saugturbinenteil 24 und dem Staubsammelraum 21 ist eine Zwischenwand 30 angeordnet, die den Gehäuseinnenraum 23 sozusagen in den Saugturbinenteil 24 sowie den Staubsammelraum 21 unterteilt.

An der Zwischenwand 30 ist eine Durchströmöffnung 32 für der Saugstrom S vorgesehen, durch die der Saugstrom S aus dem Staubsammelraum 21 in Richtung des Saugturbinenteils 24, welches einen Saugturbinenaufnahmeraum 31 aufweist, in welchem die Saugturbine 11 aufgenommen ist, strömen kann. Die Zwischenwand 30 könnte man auch als eine Schottwand bezeichnen, die abgesehen von der Durchströmöffnung 32 sowie weiteren noch zu beschreibenden kleinen Ausströmöffnungen 98, 108 den Saugturbinenteil 24 vom Staubsammelraum 21 trennt.

Der Saugstrom S strömt über den Luftauslass 22 aus dem Saugturbinenaufnahmeraum 31 aus. Der Saugturbinenteil 24 und insbesondere der Saugturbinenaufnahmeraum 31 sind durch eine Abdeckwand 34 verschlossen, während der Staubsammelraum 21 an seiner zu der Bodenwand 25 entgegengesetzten Seite, in Gebrauchslage z.B. oben, offen ist.

Der Luftauslass 22 ist beispielsweise an einer der Umfangswände des Sauggerät-Gehäuses 20 angeordnet, beispielsweise der vorderen Längsseitenwand 26, wobei aber auch die Längsseitenwände 27 oder 28 einen Luftauslass aufweisen könnten. Vorteilhaft ist es jedenfalls, wenn der Luftauslass 22 nicht an der Bodenwand 25 und/oder nicht an der Abdeckwand 34 angeordnet ist, wobei beides prinzipiell möglich ist.

Der Staubsammelraum 21 weist ein Aufnahmefach 35 für einen Staubsammelbehälter 36 auf. Der Staubsammelbehälter 36 dient zum Sammeln von Schmutz. Es kann auch ein Filtersack in dem Staubsammelbehälter 36 oder dem Staubsammelraum 21 anordenbar sein.

Der Staubsammelbehälter 36 ist beispielsweise als eine Art Kassette oder Modul ausgestaltet, welches aus dem Sauggerät-Gehäuse 20 entnommen werden kann, um beispielsweise Staub aus dem Staubsammelbehälter 36 zu entleeren.

Der Staubsammelbehälter 36 weist eine Bodenwand 37, von der Bodenwand abstehende Seitenwände 38 und 39 sowie eine Filter-Aufnahme 40 für das Filterelement 13 auf, die einen Innenraum 43 des Staubsammelbehälters 36 begrenzen. Das Filterelement 13 liegt der Seitenwand 39 gegenüber. Die Seitenwände 38 erstrecken sich zwischen der Filter-Aufnahme 40 und der Seitenwand 39. Die Seitenwände 38, 39 sowie eine obere Wand der Filter-Aufnahme 40 begrenzen eine Aufnahmeöffnung 41, die der Bodenwand 37 gegenüberliegt. Mithin ist also der Staubsammelbehälter 36 zu seiner Oberseite offen.

An den Seitenwänden 38 ist ein Tragegriff 42 in der Art eines Henkels anhand von Schwenklagern 42A schwenkbar angelenkt, mit dem der Staubsammelbehälter 36 ergriffen werden kann. Wenn der Tragegriff 42 ausgeschwenkt ist, kann er von einem Bediener ergriffen werden. Wenn der Staubsammelbehälter 36 in das Aufnahmefach 35 eingesetzt ist, kann der Tragegriff 42 in Richtung der Filter-Aufnahme 40 geschwenkt werden, sodass der Tragegriff 42 nicht oder unwesentlich vor die Aufnahmeöffnung 41 vorsteht.

Vorteilhaft ist vorgesehen, dass der in Richtung der Filteraufnahme 40 geschwenkte Tragegriff 42 den Staubsammelbehälter 36 im Aufnahmefach 35 verriegelt. Zugleich wird zweckmäßigerweise dabei das Filterelement 13 in Richtung der Zwischenwand 30 gespannt, sodass eine Strömungsverbindung zwischen dem Innenraum 43 des Staubsammelbehälters 36 und der Durchströmöffnung 32 und somit der Saugturbine 11 über das Filterelement 13 hergestellt ist.

Das Saugturbinenteil 24 und der Staubsammelraum 21 bilden Bestandteile eines Gehäuseunterteils 44 des Sauggerät-Gehäuses 20. Das Gehäuseunterteil 44 ist durch einen Deckel 45 verschließbar. Im geöffneten Zustand des Sauggerät-Gehäuses 20 oder einer Offenstellung OD des Deckels 45 ist das Aufnahmefach 35 offen, um den Staubsammelbehälter 36 in das Aufnahmefach 35 einzusetzen oder aus diesem zu entnehmen.

Der Deckel 45 weist einen Deckelkörper, z.B. eine Deckwand 46, auf, die einen Saugturbinenabschnitt 47 sowie einen Verschlussabschnitt 48 umfasst. Der Saugturbinenabschnitt 47 ist dem Saugturbinenteil 24 zugeordnet und liegt der Abdeckwand 34 im geschlossenen Zustand des Deckels 45 gegenüber.

Der Verschlussabschnitt 48 weist eine Dichtung 49 auf, mit der der Innenraum 43 des Staubsammelbehälters 36 verschließbar ist. Die Dichtung 49 liegt im geschlossenen Zustand des Deckels 45 beispielsweise an den Stirnseiten der Seitenwände 38 und 39 sowie einer die Filter-Aufnahme 40 begrenzenden Seitenwand gegenüber und insbesondere an diesen Seitenwänden 38, 39 sowie dem Außenumfang der Filter-Aufnahme 40 an, sodass der Verschlussabschnitt 48 den Staubsammelbehälter 36 dicht verschließt.

Der Deckel 45 ist anhand einer Verriegelungseinrichtung 50 mit dem Gehäuseunterteil 44 in einer Schließstellung SD des Deckels 45 verriegelbar.

Die Verriegelungseinrichtung 50 umfasst ein schwenkbar am Deckel 45 gelagertes Verriegelungselement 51, das in einer Verriegelungsstellung in Eingriff mit einem Verriegelungselement 52 am Gehäuseunterteil 44 ist und in eine Lösestellung schwenkbar ist, in der es außer Eingriff mit dem Verriegelungselement 52 ist. Das Verriegelungselement 51 ist also in der Art eines Schwenkriegels ausgestaltet. Das Verriegelungselement 52 ist an der Längsseitenwand 26 des Gehäuseunterteils 44 angeordnet. Das Verriegelungselement 52 ist beispielsweise als ein Verriegelungsvorsprung ausgestaltet. Korrespondierend zu der vorderseitigen Anordnung des Verriegelungselements 52 ist das Verriegelungselement 51 an einer der Vorderseite oder vorderen Längsseite 16 des Sauggeräts 10 zugeordneten Vorderseite des Deckels 45 angeordnet.

Der Deckel 45 ist anhand von Schwenklagern 53 schwenkbar am Gehäuseunterteil 44 angelenkt und zwischen seiner Offenstellung OD und seiner Schließstellung SD verschwenkbar. Die Schwenklager 53 sind beispielsweise an der Längsseitenwand 27, insbesondere deren oberen Stirnseite oder Schmalseite, angeordnet.

Ein optional zwischen dem Deckel 45 und dem Gehäuseunterteil 44 vorhandenes Band 53A, welches beispielsweise an der Abdeckwand 34 und einer dieser gegenüberliegenden Wandfläche des Verschlussabschnitts 48 befestigt ist, begrenzt den Schwenkweg des Deckels 45 in Richtung seiner Offenstellung OD.

An der Unterseite 14 des Sauggerät-Gehäuses 20 sind Füße 54, 55 angeordnet, mit denen das Sauggerät-Gehäuse 20 auf einem Untergrund abstellbar ist, aber auch in Eingriff mit Aufnahmen 56, 57 mit einem weiteren Sauggerät-Gehäuse 20 eines gleichartigen Sauggeräts 10 in Eingriff gebracht werden kann. Die Füße 54 und die Aufnahmen 56 sind nahe bei der hinteren Längsseitenwand 27 angeordnet. Die Aufnahmen 56 und die Füße 54 weisen Hintergreifkonturen 56A, 54A auf, die quer zu einer Stapelrichtung oder Stapelachse SR in Eingriff und außer Eingriff miteinander bringbar sind und dann, wenn sie in Eingriff miteinander sind, entlang der der Stapelachse SR aufeinandergestapelte Sauggerät-Gehäuse 20 zugfest zu verbinden. Die Hintergreifkonturen 56A, 54A bilden Bestandteile von Koppelmitteln 58. Die Koppelmittel 58 zum Verkoppeln von aufeinandergestapelten Behältern oder Sauggerät-Gehäusen 20 umfassen weiterhin ein Verriegelungselement 59, welches in der Art des Verriegelungselements 52 am Gehäuseunterteil 44 angeordnet ist, jedoch nicht nahe bei der freien Stirnseite der Längsseitenwand 26, sondern nahe bei der Bodenwand 25. Weiterhin bildet auch das Verriegelungselement 51 einen Bestandteil der Koppelmittel 58. Wenn das Verriegelungselement 51 eines jeweils unteren Behälters oder Sauggerät-Gehäuses 20 in Eingriff mit dem Verriegelungselement 59 gebracht wird, indem das Verriegelungselement 51 verschwenkt wird, sind die Behälter oder Sauggerät-Gehäuse 20 auch im Bereich der Vorderseite oder vorderen Längsseite 16 miteinander gekoppelt und somit eine zugfeste Verbindung dieser Sauggerät-Gehäuse 20 in Richtung der Stapelachse SR oder in Stapelrichtung hergestellt.

Der Saugeinlass 12 ist durch ein Verschlusselement 60 verschließbar.

Das Verschlusselement 60 weist einen Verschlusskörper 61, der in den Saugeinlass 12 einsteckbar ist. Der Verschlusskörper 61 ist also als ein Steckvorsprung oder Steckkörper ausgestaltet.

Das Verschlusselement 60 ist anhand eines Lagers 62 zwischen einer Verschlussstellung V und einer Freigabestellung FS an dem Sauggerät-Gehäuse 20 beweglich gelagert, wobei das Verschlusselement 60 in der Verschlussstellung V den Saugeinlass 12 verschließt und in der Freigabestellung FS freigibt. In der Freigabestellung FS ist der Saugeinlass 12 zum Anordnen, insbesondere zum Einstecken des Saugschlauchs SL frei oder offen.

Das Lager 62 ist beispielsweise ein Schwenklager, anhand dessen das Verschlusselement 60 um eine Schwenkachse SC schwenkbar gelagert ist. Die Schwenkachse SC ist beispielsweise orthogonal zur oberseitigen Fläche der Oberseite 45A des Deckels 44 bzw. zur oberseitigen Fläche des Sauggerät-Gehäuses 20.

Das Lager 62 umfasst einen Lagervorsprung 63 am Verschlusselement 60, der in eine Lageraufnahme 64 an der Oberseite 15 des Deckels 44 eingreift. Die Lageraufnahme 64 ist beispielsweise als eine Durchtrittsöffnung an dem Deckelkörper oder der Deckwand 46 ausgestaltet. Der Lagervorsprung 63 durchdringt die Durchtrittsöffnung. Von dem Lagervorsprung 63, insbesondere an seinem freien Endbereich, ist eine Hintergreifkontur 63A, beispielsweise ein flanschartiger Rastvorsprung oder dergleichen, die den Deckelkörper oder die Deckwand 46 an einer von der Oberseite 15 abgewandten Unterseite des Deckels 45 hintergreift, sodass das Verschlusselement 60 verliersicher, jedoch schwenkbar an dem Deckel 45 oder dem Sauggerät-Gehäuse 20 gehalten ist.

Der Verschlusskörper 61 und der Lagervorsprung 63 sind an einem Armkörper 65 des Verschlusselements 60 angeordnet. Der Armkörper 65 erstreckt sich entlang einer Längsachse L60 zwischen dem Lagervorsprung 63 und dem Verschlusskörper 61, welche an einander entgegengesetzten Längsendbereichen des Armkörpers 65 angeordnet sind.

Der Armkörper 65 ist vorzugsweise plattenartig und/oder ist in der Art einer Lasche ausgestaltet.

Der Deckel 45 und somit das Sauggerät-Gehäuse 20 weisen eine Verschlusselement-Aufnahme 67 für das Verschlusselement 60 auf. Die Verschlusselement-Aufnahme 67 ist als eine Vertiefung an der Oberseite 45A des Deckels 45 ausgestaltet. Eine von der Oberseite 45A des Deckels 45 abgewandte Oberseite 66 des Verschlusselements 60 steht nicht vor die Oberseite 45A des Deckels 45 vor oder steht hinter diese Oberseite 45A zurück, was jedoch beim Ausführungsbeispiel nicht dargestellt ist, jedoch eine Option darstellt. Somit steht die Oberseite 45A des Deckels 45 zum Aufstapeln eines weiteren Behälters oder Sauggerät-Gehäuses 20 oder auch des nachfolgend noch erläuterten Behälteraufsatzes 200 zur Verfügung, ohne dass das Verschlusselement 60 eine Störkontur darstellt.

Die Verschlusselement-Aufnahme 67 ist in Draufsicht beispielsweise etwa dreieckförmig, wobei in einem Eckbereich dieses Dreiecks das Lager 62 angeordnet und in den anderen Eckbereichen der Saugeinlass 12 sowie eine Bereitstellungsaufnahme 68 angeordnet sind.

Auch die Bereitstellungsaufnahme 68 ist als eine Steckaufnahme ausgestaltet und weist eine Umfangswand 69 sowie einen Boden 70 auf.

Der Saugeinlass 12 ist als eine Steckaufnahme mit einer Umfangswand 71 ausgestaltet, in die wahlweise der Formschlusskörper 61 oder der Saugschlauch SL einsteckbar sind.

Der Verschlusskörper 61 steht in der Art eines Verschlussvorsprungs vor den Armkörper 65 vor und weist eine Umfangswand 72 sowie einen Boden 73 auf. Von dem Boden 70 steht in einen von der Umfangswand 72 begrenzten Innenraum ein Griffabschnitt 74 vor, der einen Handgriff 74A zum Ergreifen des Verschlusselements 60 bildet.

Der Verschlusskörper 61, vorzugsweise das Verschlusselement 60 als Ganzes, besteht aus einem flexiblen Material, welches zum einen einen Klemmsitz oder Dichtsitz in dem Saugeinlass 12 oder der Bereitstellungsaufnahme 68 ermöglicht, zum andern aber auch eine bequeme Handhabung ermöglicht. Dies wird nachfolgend deutlicher:
Beispielsweise ist der Armkörper 65 flexibel, sodass der Verschlusskörper 61 unter Biegung des Armkörpers 65 aus dem Saugeinlass 12 oder der Bereitstellungsaufnahme 68 heraus bewegt werden kann.

Alternativ oder ergänzend wäre aber auch eine entsprechend bewegliche Lagerung oder schwenkbare Lagerung am Lager 62 möglich, um das Verschlusselement 60 nicht nur um Schwenkachse SC zwischen der Bereitstellungsaufnahme 68 und dem Saugeinlass 12 hin und her zu schwenken, sondern auch quer zur Schwenkachse SC außer Eingriff oder in Eingriff mit der Bereitstellungsaufnahme 68 und dem Saugeinlass 12 zu schwenken. Beispielsweise kann das Verschlusselement 60 um eine zu der Schwenkachse SC quer verlaufende Schwenkachse SQ in der Lageraufnahme 65 beweglich gelagert sein, sodass das Verschlusselement 60 von der Oberseite 45A weg außer Eingriff mit dem Saugeinlass 12 oder der Bereitstellungsaufnahme 68 beweglich ist. Dazu kann z.B. der Lagervorsprung 63 einen deutlich kleineren Durchmesser haben als die Lageraufnahme 64 und so ein Bewegungsspiel quer zur Schwenkachse SC in der Lageraufnahme 64 aufweisen.

Der Griffabschnitt 74 umfasst eine Grundwand 75, von der Seitenwände 76 abstehen. Die Grundwand 75 und die Seitenwände 76 bilden eine im Querschnitt etwa U-förmige oder V-förmige Konfiguration. Die Seitenwände 76 erstrecken sich zwischen der Grundwand 75 und dem Boden 73 des Verschlusskörpers 61. Die Grundwand 75 und der Boden 70 sind beispielsweise parallel zueinander. Die Seitenwände 76 liegen der Umfangswand 72 des Verschlusskörpers 61 gegenüber. Vorteilhaft sind die Seitenwände 76 derart lang, dass der Griffabschnitt 74 sich bis zum Armkörper 65 erstreckt. Beispielsweise fluchtet die Grundwand 75 etwa mit dem Armkörper 65 und/oder mit der Oberseite 45A des Deckels 45. Dadurch wird ein Ergreifen des Handgriffs 74A erleichtert.

Am Außenumfang der Umfangswand 72 des Verschlusskörpers 61 ist eine Dichtung 77, beispielsweise in Gestalt von Rippen oder Dichtvorsprüngen 77A, die an der Umfangswand 71 oder der Umfangswand 72 im Dichtsitz oder Klemmsitz anliegt, wenn der Verschlusskörper 61 in die Bereitstellungsaufnahme 68 oder den Saugeinlass 12 eingreift. Somit wird jedenfalls der Verschlusskörper 61 in der Bereitstellungsaufnahme 68 oder dem Saugeinlass 12 zuverlässig gehalten. Insbesondere sorgt die Dichtung 77 für eine Abdichtung des Saugeinlasses 12, wenn kein Saugschlauch SL eingesteckt ist, sodass kein Staub oder dergleichen anderer Schmutz aus dem Staubsammelbehälter 36 bzw. dem Staubsammelraum 21 in die Umgebung gelangen kann. Gleichwohl gelingt es dem Bediener einfach, das Verschlusselement 60 aus der Bereitstellungsaufnahme 68 heraus in den Saugeinlass 12 zu betätigen oder umgekehrt.

Das Einstecken in die Bereitstellungsaufnahme 68 oder den Saugeinlass 12 gelingt beispielsweise durch eine Druck-Betätigung DV auf die Grundwand 75 des Griffabschnitts 74.

Aber auch die Betätigung aus dem Saugeinlass 12 oder der Bereitstellungsaufnahme 68 heraus ist trotz des Klemmsitzes der Dichtung 77 an der Umfangswand 71 oder 72 leicht zu bewirken. Der Griffabschnitt 74 kann nämlich mit einer klammerartigen Griffbewegung ergriffen und entgegen der Betätigungsrichtung der Druck-Betätigung DV aus dem Saugeinlass 12 oder der Bereitstellungsaufnahme 68 herausgezogen werden.

Beispielsweise sind die Seitenwände 76 parallel zueinander oder wie beim Ausführungsbeispiel in einem kleinen Winkel schräg zueinander geneigt, sodass ein Bediener beim Ergreifen des Griffabschnitts 74 die beiden Seitenwände 76 klammerartig ergreifen und diese zueinander hin bewegen kann, beispielsweise durch eine Druckbelastung DO. Dadurch werden Abschnitte der Umfangswand 72 und somit der Dichtung 77 von der Umfangswand 71 oder 72 weg betätigt, sodass der Klemmsitz des Verschlusskörpers 61 an der Bereitstellungsaufnahme 68 oder dem Saugeinlass 12 aufgehoben oder zumindest weniger fest ist. Zudem kann es vorteilhaft sein, wenn die Seitenwände 76 bei Druckbelastung, wenn der Bediener auf sie einwirkt, nachgeben und Griffmulden ausbilden, sodass die Handhabung noch weiter erleichtert ist. An dieser Stelle sei erwähnt, dass selbstverständlich auch Rippenstrukturen oder dergleichen andere Greifstrukturen an dem Griffabschnitt oder Handgriff eines Verschlusselements vorgesehen sein können, um die Handhabung zu erleichtern.

Das Sauggerät 10 weist vorteilhaft einen Behälteraufsatz 200 auf oder ist mit einem Behälteraufsatz 200 kompatibel. Der Behälteraufsatz 200 ist vorzugsweise an seinem Außenumfang konturgleich mit dem Sauggerät-Gehäuse 20. Der Behälteraufsatz 200 kann auf das Sauggerät 10, nämlich dessen Sauggerät-Gehäuse 20, aufgestapelt und mit diesem anhand der bereits erläuterten Koppelmittel 58 verbunden werden.

Beispielsweise umfasst der Behälteraufsatz 200 ein Sauggerät-Gehäuse 220 mit einer Bodenwand 225, von der Längsseitenwände 226, 227, 228 und 229 abstehen, die insgesamt einen Aufnahmeraum 223 des Behälteraufsatzes 200 begrenzen. Der Aufnahmeraum 223 eignet sich zur Aufnahme des Saugschlauchs SL.

Von der Bodenwand 225 steht ein Handgriff 224 Aufnahmeraum 223 vor. Der Handgriff 224 ist der Art eines Henkels ausgestaltet, sodass der am Sauggerät-Gehäuse 20 befestigte Behälteraufsatz 200 als ein Tragegriff zum Tragen eines Stapels 9 bestehend aus Sauggerät 10 und Behälteraufsatz 200 dient. Das bildet dabei ein Sauggerät-Gehäuse 20 Stapelgehäuse 20A. Der Behälteraufsatz 200 bildet einen Stapelbehälter 200A.

Zugleich kann der Saugschlauch SL um den Handgriff 224 herum gewickelt werden, sodass dieser als eine Wickelhilfe dient.

An der Bodenwand 225 ist ein Durchlass 222 für den Saugschlauch SL vorgesehen, der mit dem Saugeinlass 12 fluchtet, wenn der Behälteraufsatz 200 an dem Sauggerät 10 befestigt ist. Weiterhin ist ein seitlicher Durchlass 221 für den Saugschlauch SL an der Längsseitenwand 28 vorgesehen.

An der Längsseitenwand 226 sind als Koppelmittel 58 Verriegelungselemente 251, 259 vorgesehen, welche baugleich und/oder kompatibel mit den Verriegelungselementen 51 und 59 sind. Somit kann also beispielsweise das Verriegelungselement 51 des Sauggeräts 10 in Eingriff mit dem Verriegelungselement 259 gebracht werden, um den Stapel 9 bestehend aus Sauggerät 10 und aufgestapelten Behälteraufsatz 200 zu bilden.

In der Zeichnung nicht sichtbar sind den Füßen 54 und 55 entsprechende Füße an der vom Aufnahmeraum 223 abgewandten Seite der Bodenwand 225, die in Eingriff mit den Aufnahmen 56 und 57 des Sauggerät-Gehäuses 20 gebracht werden können, sodass in Kombination mit den ineinander eingreifenden Verriegelungselementen 51 und 259 der Koppelmittel 58 ein zugfester Halt des Behälteraufsatzes 200 am Sauggerät 10 in Richtung der Stapelachse SR oder in Stapelrichtung bewirkt werden kann.

Ohne weiteres bewirken die Koppelmittel 58 aber auch eine feste Verbindung zwischen dem Behälteraufsatz 200 und dem Sauggerät-Gehäuse 20 quer zur Stapelachse SR.

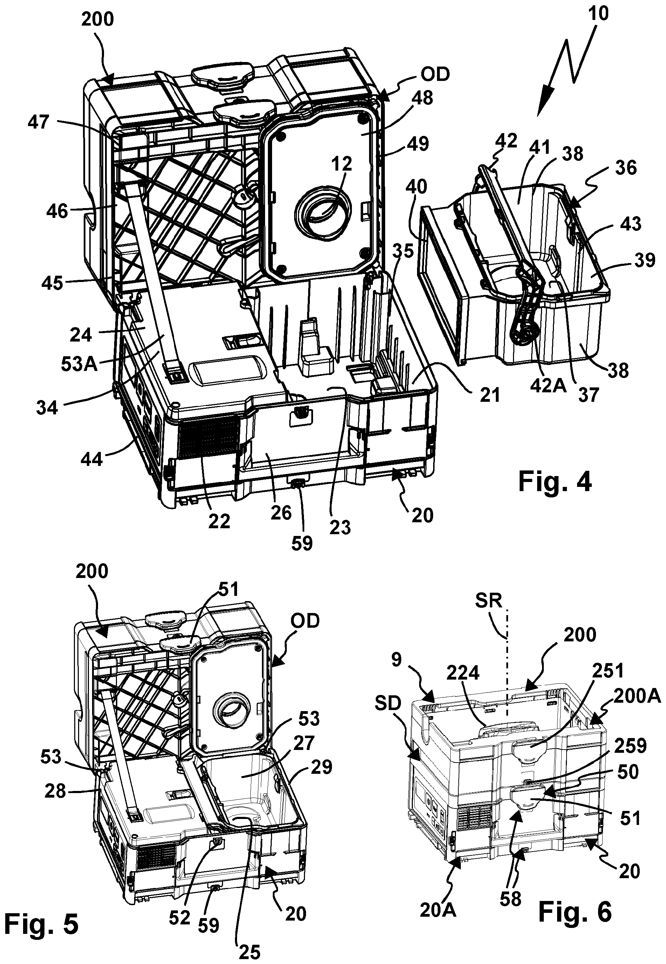

Auf den Stapel 9 können weitere Behälter, beispielsweise Behälter zum Transportieren von Werkzeugen, aufgestapelt oder untergestapelt werden, die anhand zu den Koppelmitteln 58 kompatiblen Koppelmittel mit dem Behälteraufsatz 200 oder dem Sauggerät-Gehäuse 20 koppelbar sind. So kann beispielsweise der Behälteraufsatz 200 auch unter dem Sauggerät-Gehäuse 20 angeordnet sein und mit diesem anhand der Koppelmittel 58 einen Stapel bildend verbunden werden. Weiterhin kann ein weiterer in der Zeichnung nicht dargestellte Behälteraufsatz 200 oder ein weiteres nicht dargestelltes Sauggerät 10 beispielsweise auf den in Figur 6 oberen Behälteraufsatz 200 aufgestapelt und mit diesem anhand von Koppelmitteln, die mit den Koppelmitteln 58 kompatibel sind, einen Stapel bildend gekoppelt werden.

Nun wäre es prinzipiell möglich, dass Sauggerät 10 als ein über ein Stromversorgungsnetz betreibbares Sauggerät auszugestalten. Das Sauggerät 10 ist jedoch nicht nur äußerst kompakt, sondern auch flexibel einsetzbar, indem das Sauggerät 10 eine Stromversorgungseinrichtung 80 aufweist, an die Energiespeicher 170, beispielsweise sogenannte Akkupacks, anschließbar sind.

Zur Stromversorgung sind beispielsweise zwei gleichartige Energiespeicher 170, nachfolgend auch als Energiespeicher 170A, 170B bezeichnet, vorhanden.

Die Stromversorgungseinrichtung 80 umfasst eine Energiespeicher-Aufnahme 81 im Bereich des Saugturbinenteils 24. Die Energiespeicher-Aufnahme 81 erstreckt sich zwischen der Längsseitenwand 28 und der Zwischenwand 30 nahezu über den gesamten Abstand zwischen der Längsseitenwand 28 und der Zwischenwand 30, sodass in der Energiespeicher-Aufnahme 81 zwei Energiespeicher 170 anordenbar sind.

Die Energiespeicher-Aufnahme 81 umfasst eine Einstecköffnung 82, durch die die Energiespeicher 170 in die Energiespeicher-Aufnahme 81 einsteckbar sind. Die Einstecköffnung 82 ist durch Seitenwände 83, 84 begrenzt, die neben der Seitenwand 28 des Sauggerät-Gehäuses 20 sowie der Zwischenwand 30 des Sauggerät-Gehäuses 20, insbesondere parallel zu denselben, verlaufen. Zwischen den Seitenwänden 83 und 84 erstrecken eine näher bei dem Deckel 45 befindliche Seitenwand oder Verbindungswand 85 sowie eine zur Bodenwand 25 nähere oder von der Bodenwand 25 gebildete Seitenwand oder dicken Wand 86. Die Energiespeicher-Aufnahme 81 ist durch eine Bodenwand 87 begrenzt, die der Einstecköffnung 82 gegenüber liegt.

An den Seitenwänden 83, 84 sind Geräte-Schnittstellen 90A, 90B, nachfolgend auch einheitlich als Schnittstellen 90 bezeichnet, angeordnet, mit denen die Energiespeicher 170 verbindbar sind, die zu den Schnittstellen 90 passende Energiespeicher-Schnittstellen 190 aufweisen.

Beispielsweise umfassen die Schnittstellen 90, 190 zueinander komplementär passende Längsführungskonturen 91, 191, die ineinander entlang einer Steckachse SA einsteckbar sind. Beispielsweise umfassen die Längsführungskonturen 91, 191 Längsnuten und Längsvorsprüngen, die ineinander eingreifen können.

Quer zu der jeweiligen Steckachse SA erstrecken sich Hintergreifkonturen 91A, 191A der Schnittstellen 90, 191, mit denen die Energiespeicher 170 quer zur jeweiligen Steckachse SA in formschlüssigen Eingriff mit den Geräte-Schnittstellen 90 bringbar sind.

Anhand der Hintergreifkonturen 91A, 191A und der Längsführungskonturen 91, 191 sind die Schnittstellen 90, 190 formschlüssig miteinander verbindbar abgesehen von einer Schiebebeweglichkeit entlang der jeweiligen Steckachse SA.

Weiterhin umfassen die Schnittstellen 90, 190 Rasteinrichtungen 92, 192, um die Energiespeicher 170 an den Geräte-Schnittstellen 90 zu verrasten. Die Rasteinrichtungen 92 sind beispielsweise als Rastaufnahmen 93 ausgestaltet, in die Rastvorsprünge 193 der Rasteinrichtungen 192 rastend eingreifen können, sodass die Energiespeicher 170 an den Schnittstellen 90 bezüglich der Steckachse SA verschiebefest gehalten sind. Die Rastvorsprünge 193 sind beispielsweise federbelastet oder federnd nachgiebig in Richtung ihrer Raststellung, in der sie in die Rastaufnahmen 93 eingreifen und können entgegen der vorgenannten Federbelastung außer Eingriff mit den Rastaufnahmen 93 gebracht werden.

Die Schnittstellen 90, 190 umfassen Kontaktanordnungen 94, 194, um elektrische Verbindungen zwischen dem Energiespeicher 170 und dem Sauggerät 10 herzustellen. Die Kontaktanordnungen 94, 194 umfassen beispielsweise Energieversorgungskontakte 95, 195 mit unterschiedlicher Polarität, beispielsweise einem positiven Potenzial und Masse, sowie Datenkontakte 96, 196 für eine Datenübertragung zwischen dem Sauggerät 10 und dem jeweiligen Energiespeicher 170. Eine derartige Datenübertragung sieht beispielsweise eine digitale Bus-Datenübertragung, insbesondere mit einem I2C-Bus vor.

Die Energiespeicher 170 sind vorteilhaft baugleich. Jeder Energiespeicher 171 Energiespeicher-Gehäuse 171 auf, welches an seinen Längsseiten 172A Längsseitenwände 172 sowie sich zwischen diesen erstreckende Stirnseitenwände 173, 174 umfasst. Zwischen den Seitenwänden 172-174 erstrecken sich eine Bodenwand 175 sowie dieser gegenüberliegend eine Schnittstellenwand 176, an der die Energiespeicher-Schnittstelle 190 angeordnet ist. Die Schnittstellenwand 176 kann eine stufige Gestalt aufweisen, sodass beispielsweise die Datenkontakte 196 einen größeren Abstand zu der Bodenwand 175 als die Energieversorgungskontakte 195 aufweisen.

Weiterhin sind die Energieversorgungskontakte 195 und die Datenkontakte 196 in Bezug auf die Steckachse SA hintereinander angeordnet. Beispielsweise sind die Datenkontakte 196 bezüglich der Steckrichtung entlang der Steckachse SA vorn, das heißt näher bei der Stirnseitenwand 173 angeordnet, während die Versorgungskontakte 195 in Einsteckrichtung entlang der Steckachse SA hinten, also bei der Stirnseitenwand 174 angeordnet sind. Das Energiespeicher-Gehäuse 171 weist einen Innenraum 177 auf, in dem geschützt vor Umwelteinflüssen Batteriezellen 178 angeordnet sind. Allerdings erwärmen sich die Batteriezellen 178 beispielsweise bei einem Aufladen oder Entladen, also wenn das Sauggerät 10 anhand der Energiespeicher 170 betrieben wird. Jedoch sind die Batteriezellen 178 bei den Energiespeichern 170 aktiv gekühlt, wozu jeder Energiespeicher 170 einen Ventilator 179 aufweist. Der Ventilator 179 erzeugt einen Kühlluftstrom KL, der durch eine Energiespeicher-Einströmöffnung 180 in den Innenraum 177 einströmt und durch eine Energiespeicher-Ausströmöffnung 181 aus diesem ausströmend. Beispielsweise ist die Energiespeicher-Einströmöffnung 180 an der Bodenwand 175 angeordnet, während die Energiespeicher-Ausströmöffnung 181 an der Schnittstellenwand 176 angeordnet ist. Zudem sind die Energiespeicher-Einströmöffnungen 180 und die Energiespeicher-Ausströmöffnungen 181 an einander entgegengesetzten Längsendbereichen des Energiespeichers 170, nämlich nahe bei der Stirnseitenwand 174 und der Stirnseitenwand 173 angeordnet, sodass der Kühlluftstrom KL, z.B. beim Energiespeicher 170 ein Kühlluftstrom KLA und beim Energiespeicher 170B ein Kühlluftstrom KLB, einen jeweiligen Energiespeicher 170 sozusagen von hinten nach vorn in Bezug auf die Steckrichtung oder Steckachse SA durchströmt.

Die Geräte-Schnittstellen 90 sind an einander entgegengesetzten Seiten der Energiespeicher-Aufnahme 81, nämlich an den Seitenwänden 83 und 84 angeordnet. Dementsprechend sind die Energiespeicher 170 mit einander gegenüberliegenden Bodenwänden 175 in der Energiespeicher-Aufnahme 81 aufgenommen.

Zur Betätigung der Rasteinrichtungen 192 sind Bedienelemente 197 an den Längsseitenwänden 172 der Energiespeicher-Gehäuse 171 vorgesehen. Ein Bediener kann also die Energiespeicher-Gehäuse 171 sozusagen seitlich und/oder klammerartig umgreifen, um simultan auf die beiden an den einander entgegengesetzten Längsseitenwänden 172 angeordneten Bedienelemente 197 einzuwirken, um die Rastvorsprünge 193 außer Eingriff mit den Rastaufnahmen 93 zu bringen, sodass der jeweilige Energiespeicher 170 von der Geräte-Schnittstelle 90 entfernbar ist.

Die Aufnahmen 81 erlauben dabei eine bequeme Handhabung, weil nämlich zwischen den Verbindungswänden 85, 86 und den in die Energiespeicher-Aufnahme 81 eingesteckten Energiespeichern 170 Bedienräume 88 und 89 vorhanden sind, in die hinein ein Bediener zum Betätigen der Bedienelemente 197, die beispielsweise Druckflächen oder Tastflächen aufweisen, fassen kann. Die Bedienräume 88 und 89 sind sozusagen einheitliche oder durchgängige Bedienräume, weil zwischen den in der Energiespeicher-Aufnahme 81 aufgenommenen Energiespeichern 170 keine trennende Komponente vorhanden ist. Wenn nämlich beispielsweise die Energiespeicher 170 mit einander zugewandten Energiespeicher-Schnittstellen 190 in der Energiespeicher-Aufnahme 81 aufgenommen wären, müsste eine Zwischenwand in der Energiespeicher-Aufnahme 81 vorhanden sein, an der die Geräte-Schnittstellen 90 angeordnet sind.

Zudem kann der Bediener aufgrund der großzügigen Auslegung der Bedienräume 88 und 89 die Energiespeicher 170 beispielsweise an deren Längsseitenwänden 172 ergreifen, um sie aus der Energiespeicher-Aufnahme 81 zu entfernen. Ohne weiteres ist die Bedienung aber auch beim Einstecken der Energiespeicher 170 in die Energiespeicher-Aufnahme 81 dadurch erleichtert, weil auch in diesem Fall der Bediener die Längsseitenwände 172 ergreifen kann, um einen jeweiligen Energiespeicher 170 an die ihm zugeordnete Geräte-Schnittstelle 90 anzustecken.

Vorteilhaft sind die Seitenwände 83, 84 derart zueinander beabstandet, dass die an die Geräte-Schnittstellen 90 angesteckten Energiespeicher 170 zwischen ihren Bodenwänden 175 ein Abstand vorhanden, sodass der Kühlluftstrom KL in den Zwischenraum zwischen den Bodenwänden 175 einströmen kann.

Zur Abfuhr der Kühlluftströme KL der an den Geräte-Schnittstellen 90 angeordneten Energiespeicher 170 dienen Ausströmöffnungen 97 und 98, die nahe bei den Geräte-Schnittstellen 90 und somit nahe bei den Energiespeicher-Ausströmöffnungen 181 der Energiespeicher 170 an den Seitenwänden 83 und 84 der Energiespeicher-Aufnahme 81 angeordnet sind. Die Ausströmöffnungen 97 und 98 sind nachfolgend wegen ihrer Anordnung in der Energiespeicher-Aufnahme 81 als Aufnahme-Ausströmöffnungen bezeichnet und befinden sich nahe an der Bodenwand 87, sodass sich in der Energiespeicher-Aufnahme 81 wenig oder keine Wärme aufstaut.

Die Aufnahme-Ausströmöffnung 98 mündet direkt in einen Zwischenraum zwischen die Zwischenwand 30 und dem Filterelement 13, sodass ein Kühlluftkanal 99 zwischen der Zwischenwand 30 und dem Filterelement 13 gebildet ist, der von der Aufnahme-Ausströmöffnung 98 zu der Durchströmöffnung 32 an der Zwischenwand 30 führt. Somit kann ein Kühlluftstrom KLA des an der Seitenwand 84 angeordneten Energiespeichers 170 aus der Aufnahme-Ausströmöffnung 98 ausströmen und wird von der Saugturbine 11 über den Kühlluftkanal 99 abgesaugt. Dabei kann die Saugturbine 11 den Kühlluftstrom KLA sogar noch verstärken, der schematisch durch Pfeile angedeutet ist.

Der Energiespeicher 170B ist durch einen Kühlluftstrom KLB kühlbar, der durch die Aufnahme-Ausströmöffnung 97 aus der Energiespeicher-Aufnahme 81 ausströmen kann. Die Aufnahme-Ausströmöffnung 97 bildet eine Kanal-Einströmöffnung 97A für einen Kühlluftkanal 100.

Ohne weiteres ist es möglich, durch beispielsweise eine Schlauchverbindungsleitung oder dergleichen, die Aufnahme-Ausströmöffnung 97 mit der Durchströmöffnung 32 an der Zwischenwand 30 oder jedenfalls eine Saugturbine-Einströmöffnung 11A der Saugturbine 11 strömungstechnisch zu verbinden, sodass der Kühlluftstrom KLB unmittelbar zur Saugturbine 11 strömt bzw. von dieser angesaugt wird.

Vorliegend ist jedoch eine andere Konstruktion gewählt, bei der der Kühlluftkanal 100 nicht unmittelbar zu der Durchströmöffnung 32 führt, sondern in einen weiteren Kühlluftkanal 101 einmündet, der zur Kühlung weitere Komponenten des Sauggeräts 10 dient, beispielsweise zur Kühlung einer Bestromungseinrichtung 140 sowie auch zu einer dauerhaften Kühlung der Saugturbine 11.

Die Saugturbine 11 ist z.B. eine sogenannte Durchlassturbine oder eine Turbine die durch den von ihr geförderten Saugstrom gekühlt oder kühlbar ist.

Eine derartige dauerhafte Kühlung der Saugturbine 11 ist insbesondere dann wesentlich, wenn diese einströmseitig ansonsten nicht ausreichend Luft ansaugen kann. Eine solche Situation tritt beispielsweise auf, wenn der Saugeinlass 12 verstopft ist oder zugehalten wird, wenn das Filterelement 13 nicht mehr durchgängig ist, wenn der Staubsammelraum 21 überfüllt ist oder dergleichen.

Die Saugturbine 11 ist eine sogenannte Durchlassturbine. Die Saugturbine 11 weist an ihrer der Durchströmöffnung 32 zugewandten Seite die Saugturbine-Einströmöffnung 11A auf und an ihrer von der Durchströmöffnung 32 abgewandten Seite mindestens eine, vorzugsweise mehrere Saugturbine-Ausströmöffnungen 11B auf.

Vorteilhaft ist es, wenn eine Dichtung 11E zwischen einerseits der Zwischenwand 30 und andererseits der der Zwischenwand 30 zugewandten und die Saugturbine-Einströmöffnung 11A aufweisenden Stirnseite der Saugturbine 11 vorgesehen ist, sodass diese dicht an der Zwischenwand 30 anliegt und der Saugstrom S durch die Durchströmöffnung 32 strömen kann, jedoch nicht in den Saugturbinenaufnahmeraum 31, in welchem die Saugturbine 11 angeordnet ist, strömt.

Der Saugturbinenaufnahmeraum 31 ist im Bereich der Saugturbine-Ausströmöffnungen 11B durch eine Seitenwand 31A begrenzt. Zwischen der Seitenwand 31A und der Stirnseite der Saugturbine 11, an der oder neben der die Saugturbine-Ausströmöffnungen 11B angeordnet sind, ist vorteilhaft ein Saugturbinenlagerelement 11F angeordnet, welches elastisch nachgiebig ist, sodass dieses Saugturbinenlagerelement 11F und die Dichtung 11E die Saugturbine 11 in dem Sauggerät-Gehäuse 20 schwingungsgedämpft lagern.

Die Saugturbine 11 weist ein schematisch dargestelltes Gebläse 11C sowie einen elektrischen Antriebsmotor 11D zum Antrieb des Gebläses 11C auf. Der Antriebsmotor 11D wird im Normalbetrieb des Sauggeräts 10, also wenn der Saugstrom S strömt, durch den Saugstrom S gekühlt.

Zur Bestromung der Saugturbine 11, insbesondere des Antriebsmotors 11D, weist das Sauggerät 10 eine Bestromungseinrichtung 140 auf. Die Bestromungseinrichtung 140 umfasst beispielsweise eine oder mehrere leistungselektronische Halbleiterelemente 141, zum Beispiel Thyristoren, MosFets oder dergleichen. Die Halbleiterelemente 141 erwärmen sich beim Betrieb, nämlich bei der Bestromung der Saugturbine 11.

Die Bestromungseinrichtung 140 ist an einer Leiterplatte 104 angeordnet, die sandwichartig zwischen der Längsseitenwand 28 sowie der Seitenwand 83 der Energiespeicher-Aufnahme 81 der Stromversorgungseinrichtung 80 angeordnet ist. Teilweise erstreckt sich die Leiterplatte 104 auch noch in einen Zwischenraum zwischen der Seitenwand 28 der Seitenwand 31A. Die Bestromungseinrichtung 140 ist anhand von Leitungen 143 mit den Geräte-Schnittstellen 90A, 90B, insbesondere den Energieversorgungskontakten 95, verbunden. Leitungen 144 verbinden die Bestromungseinrichtung 140 mit der Saugturbine 11.

Weiterhin weist das Sauggerät 10 vorteilhaft eine Steuerung 150 auf. Die Steuerung 150 umfasst beispielsweise einen Prozessor 151 sowie Speicher 152, in welchem mindestens ein Steuerungsprogramm 153 zur Ansteuerung beispielsweise der Saugturbine 11 vorgesehen sind.

Anhand von Bedienelementen 155, die an einer Bedienwand 156 angeordnet sind, kann ein Bediener das Sauggerät 10 steuern. Die Bedienwand 156 ist an der Seitenwand 28 angeordnet.

Die Steuerung 150 ist mit den Bedienelementen 155 elektrisch verbunden. Mit den Bedienelementen 155 kann das Sauggerät 10 beispielsweise eingeschaltet werden oder ausgeschaltet werden. Weiterhin kann die Leistung der Saugturbine 11 anhand der Bedienelemente 155 einstellbar sein. Vorteilhaft ist eine Anzeige 157 an der Bedienwand 156 vorgesehen, beispielsweise um einen Status des Sauggeräts 11 anzuzeigen.

Auch die Steuerung 150 erzeugt Wärme, deren Abfuhr beim Sauggerät 11, wie nachfolgend deutlich wird, vorteilhaft gelöst ist.

Der Kühlluftkanal 101 ist mit der Aufnahme-Ausströmöffnung 97 strömungsverbunden. Somit kann Luft in den Kühlluftkanal 101 über die Aufnahme-Ausströmöffnung 97 einströmen, beispielsweise der Kühlluftstrom KLB. Der Kühlluftstrom KLB ist jedoch bereits durch die Kühlung des Energiespeichers 170B erwärmt.

Umgebungsluft, also in der Regel kühlere Luft, kann als ein Kühlluftstrom KLC über eine Kanal-Einströmöffnung 102 in den Kühlluftkanal 101 einströmen. Die Kanal-Einströmöffnung 102 ist beispielsweise nahe bei der Bodenwand 25 an einem der Bodenwand 25 zugewandten Bereich der Längsseitenwand 28 angeordnet. Vorteilhaft ist an der Kanal-Einströmöffnung 102 ein Schutzgitter 102A angeordnet.

Der Kühlluftstrom KLC strömt über die Kanal-Einströmöffnung 102 in einen Kanalabschnitt 103A des Kühlluftkanals 101 ein, der zwischen der Leiterplatte 142 und der Seitenwand 31A verläuft. Mithin wird also die Leiterplatte 142 vom Kühlluftstrom KLC hinterströmt oder der Kühlluftstrom KLC strömt an der Leiterplatte 142 vorbei. Dabei ist der Kanalabschnitt 103A so gewählt, dass der Kühlluftstrom KLC im Wesentlichen an der Bestromungseinrichtung 140 vorbeiströmt, also insbesondere an den Halbleiterelementen 141, die beim Betrieb des Sauggeräts 11 besonders warm werden. Einer solchen Erwärmung und schlimmstenfalls Erhitzung wird jedoch anhand des Kühlluftstroms KLC effektiv entgegengewirkt.

An seinem von der Kanal-Einströmöffnung 102 entfernten mündet der Kanalabschnitt 103A in einer Schlauchaufnahme 104, in der ein Schlauch 110, mithin also ein Rohrkörper 110A zur Führung von Kühlluft, aufgenommen ist.

Die Schlauchaufnahme 104 weist beispielsweise eine Steckaufnahme 105, in die der Schlauch 110 eingesteckt ist, sowie eine Luftleitfläche 106 an einer Wand 107 auf.

Der aus dem Kanalabschnitt 103A ausströmende Kühlluftstrom KLC wird über die Luftleitfläche 106 in eine Einlassöffnung 111 des Schlauches 110 geleitet. Zwischen der Einlassöffnung 111 und der Luftleitfläche 106 oder der Wand 107 ist ein Abstand vorhanden, sodass der Kühlluftstrom KLC ungehindert in die Einlassöffnung 111 einströmen kann.

Die Ausgestaltung und/oder ein Querschnitt der Steckaufnahme 105 gewährleistet, dass der Schlauch 110 nur in einem solchen Maße komprimiert wird, dass er in der Steckaufnahme 105 sicher klemmt, jedoch nicht komprimiert wird derart, dass sein Strömungsquerschnitt zum Durchleiten des Kühlluftstroms KLC nicht mehr ausreicht. Vorteilhaft liegt der Steckaufnahme 105 ein Steckanschlag 105A gegenüber, an der ein Mantel des Kühlluft-Schlauchs 110 beim Einstecken in die Steckaufnahme 105 anschlagen kann. Der Steckanschlag 105A weist einen Abstand zu der Luftleitfläche 106 auf. Die Einlassöffnung 111 kann wegen des Steckanschlags 105A nicht durch die Luftleitfläche 106 verschlossen werden.

Der Kühlluftstrom KLB kann an der Leiterplatte 142 vorbei und/oder in einem Zwischenraum zwischen der Leiterplatte 142 und der Abdeckwand 34 auch in die Einlassöffnung 111 des Kühlluft-Schlauchs 110 einströmen, sodass der Kühlluft-Schlauch 110 sowohl den Kühlluftstrom KLB als auch den Kühlluftstrom KLC in Richtung der Kanal-Ausströmöffnung 108 führt. Der Kühlluft-Schlauch 110 stellt somit einen gemeinsamen Kanalabschnitt 103B für die Kühlluftströme KLB und KLC bereit.

Der Kühlluft-Schlauch 110 weist einen Schlauchabschnitt 112 auf, der den Kühlluftstrom KLC und/oder den Kühlluftstrom KLB an dem Saugturbinenaufnahmeraum 31 vorbei bis zu einer Kanal-Ausströmöffnung 108 führt, die an der Zwischenwand 30 angeordnet ist und in den Zwischenraum zwischen der Zwischenwand 30 und dem Filterelement 13 ausmündet. Dort kann der Kühlluftstrom KLC und/oder der Kühlluftstrom KLB in Richtung der Durchströmöffnung 32 strömen, um von der Saugturbine 11 abgesaugt zu werden.

Der Schlauchabschnitt 112 weist einen bogenförmigen Verlauf auf. Ein Endbereich 113 des Schlauchabschnitts 112 ist im Bereich der Kanal-Ausströmöffnung 108 in einer Aufnahme 109 gehalten, die beispielsweise als eine Steckaufnahme ausgestaltet ist.

Die Kühlluftströme KLA, KLB kühlen zwar primär die Energiespeicher 170A, 170B, zudem aber auch die Saugturbine 11.

Weiterhin kühlt der Kühlluftstrom KLC zwar die Bestromungseinrichtung 140, zudem aber auch die Saugturbine 11.

Da zur Kühlung der Energiespeicher 170A, 170B kleinere Kühlluftströme notwendig sind, weisen die Kühlluftkanäle 99 und 100 vorteilhaft kleinere Strömungsquerschnitte auf als der Kühlluftkanal 101. Der Kühlluftkanal 101 kühlt nämlich die Leistungselektronik, z.B. die Halbleiterelemente 141. Diese Maßnahme trägt dazu bei, dass ausreichend Kühlluft durch den Kühlluftkanal 101 strömt und nicht sozusagen an diesem vorbei durch die Kühlluftkanäle 99 und/oder 100.

Die Kanal-Einströmöffnungen 97A, 98A sowie 102 sind dauerhaft geöffnet. Somit können die Kühlluftströme KLA, KLB und KLC dauerhaft zur Kühlung der Saugturbine 11 beitragen.

Weiterhin ist an der Saugturbine 11 ein Sensor 154 angeordnet, dessen Sensorsignale von der Steuerung 150 ausgewertet werden. Der Sensor 154 umfasst oder ist beispielsweise ein Temperatursensor und/oder Drucksensor und/oder Strömungssensor. Durch die dauerhafte Kühlung der Saugturbine 11 anhand der Kühlluftströme KLA, KLB und KLC auch dann, wenn der Saugstrom S unterbrochen ist oder nicht strömt, ausreichend Strömungsdruck am Sensor 154 vorhanden, sodass dieser valide Temperatursignale an die Steuerung 150 melden kann.

Schließlich ist die Steuerung 150 zur Überwachung eines Volumenstroms des Saugstroms S ausgestaltet, beispielsweise anhand des mindestens einen Steuerungsprogramms 153.

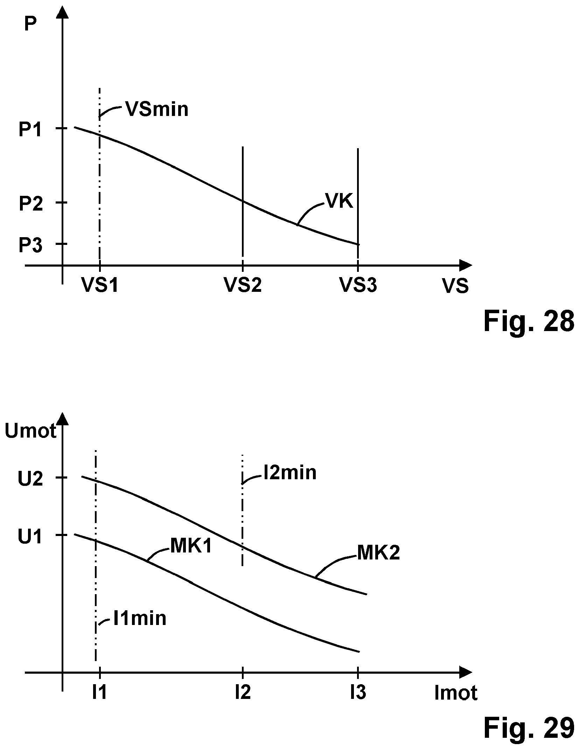

Beispielsweise weist der Saugstrom S einen Volumenstrom VS auf, der einen druckabhängigen Verlauf abhängig von einem Druck P aufweist. Ein Kennlinie VK eines Volumenstroms des Saugstroms S ist in Figur 28 schematisch eingezeichnet. Bei Drücken P1, P2 und P3, die negativ sind oder Unterdrücke sind, weist der Volumenstrom VS beispielsweise Werte VS1, VS2 und VS3 in Litern pro Sekunde auf.

Der Saugstrom S soll beispielsweise nicht unter eine Minimalgeschwindigkeit von beispielsweise 20 m/s fallen, sodass beispielsweise eine sogenannte Staubklasse eingehalten wird, gemäß der das Sauggerät 10 stets eine für diese Staubklasse ausreichende Absaugung gewährleistet.

Abhängig von einem Durchmesser des Saugschlauches SL ergibt sich aus der geforderten Minimalgeschwindigkeit des Saugstroms S ein Minimalwert VSmin für den Volumenstrom des Saugstroms S, der beispielsweise bei einem Schlauchdurchmesser von 27 mm des Saugschlauchs SL ca. 10 l/s beträgt.

Durch den konstanten Luftstrom, der unter anderem durch die Kühlluftströme KLA, KLB und KLC bereitgestellt wird, kann die Steuerung 150 anhand von Motorkennlinien MK1 und MK2 sowie weiteren, in der Zeichnung nicht dargestellten Motorkennlinien des Antriebsmotors 11D der Saugturbine 11 eine Kennlinie VK des Volumenstroms des Saugstroms S ermitteln, weil nämlich sowohl die Kennlinie VK als auch die Motorkennlinien MK1 und MK2 in dem für die Überwachung des Volumenstroms bzw. der Strömungsgeschwindigkeit des Saugstroms S relevanten Bereich einen im Wesentlichen konstanten, insbesondere im Wesentlichen linearen, Verlauf aufweisen.

Die Motorkennlinien MK1 und MK2 sind abhängig von Spannungen U1 und U2, mit denen der Antriebsmotor 11D betrieben wird. Die Motorkennlinien MK1 und MK2 sind proportional zu einem Stromverlauf des Motorstroms Imot, mit dem der Antriebsmotor 11D durch die Bestromungseinrichtung 140 bestromt wird.

Die Steuerung 150, insbesondere das Steuerungsprogramm 153, steuert die Bestromungseinrichtung 140 an und erhält von dieser als Rückmeldung beispielsweise die jeweils anliegende Motorspannung, beispielsweise die Motorspannungen U1 und U2, sowie den jeweiligen Motorstrom Imot zur Bestromung des Antriebsmotors 11D.

Wenn die Motorkennlinie MK1 bzw. der Motorstrom Imot den Wert I1 min oder die Motorkennlinie MK2 bzw. der Motorstrom Imot den Wert I2min unterschreiten, die jeweils mit dem Minimalwert VSmin für den Volumenstrom des Saugstroms S korrespondieren, erkennt die Steuerung 150, dass die Strömungsgeschwindigkeit des Saugstroms S zu gering ist und gibt beispielsweise eine Warnung an der Anzeige 157 aus. Die Steuerung 150 kann in diesem Fall alternativ oder ergänzend auch eine akustische Warnung an einem Lautsprecher oder einem sonstigen akustischen Ausgabemittel 158 ausgeben.

Zum komfortablen Transportieren des Sauggeräts 10 oder des Stapels 9 bestehend aus Sauggerät 10 und Behälteraufsatz 200 oder auch des Behälteraufsatzes 200 alleine eignet sich vorteilhaft ein Tragegurt 350. Der Tragegurt 350 kann anhand einer Längenverstelleinrichtung 351 ergonomisch an die jeweilige Tragesituation angepasst werden.

Der Tragegurt 350 ist wahlweise am Sauggerät 10 oder am Behälteraufsatz 200 befestigbar. Dazu weist der Tragegurt 350 an seinen Längsendbereichen jeweils eine Befestigungseinrichtung 340 auf.

Die Befestigungseinrichtungen 340 können je nach Bedarf mit Befestigungsaufnahmen 300 des Sauggeräts 10 oder mit Befestigungsaufnahmen 320 des Behälteraufsatzes 200 in Eingriff gebracht werden.

Die Befestigungseinrichtungen 340 weisen Grundkörper 341 auf, die plattenartig ausgestaltet sind.

Die Grundkörper 341 weisen an ihren Längsseiten Hintergreifkonturen 342 auf, die in Zusammenwirkung mit Hintergreifkonturen 302 der Befestigungsaufnahme 300 als Längsführungen dienen, entlang derer die Befestigungseinrichtungen 340 in eine jeweilige Befestigungsaufnahme 300 entlang einer Steckachse S300 einsteckbar sind.

In Steckrichtung vorn bezüglich einer Steckachse S300 weist der Grundkörper 341 eine weitere Hintergreifkontur 343 auf, deren vorderer Abschnitt 343A an einem Anschlag 303 der Befestigungsaufnahme 300 am Ende der Steckbewegung entlang der Steckachse S300 anschlägt.

Dann kann ein Riegel 304 der Befestigungsaufnahme 300, der anhand einer Betätigungsfläche oder Betätigungskontur 305 betätigbar ist, in seine Verriegelungsstellung gelangen, in der er hinter und/oder über eine Hintergreifkontur 344 der Befestigungseinrichtung 340 gelangt.

Der Riegel 304 ist in seine Verriegelungsstellung beispielsweise federbelastet und kann entgegen dieser Federbelastung anhand einer Betätigungsfläche 305 mit einer Entriegelungsbetätigung BE in Richtung seiner Freigabestellung betätigt werden. Dann gelangt der Riegel 304 außer Eingriff mit der Hintergreifkontur 344, sodass die Befestigungseinrichtung 300 wieder aus der als Steckaufnahme ausgestalteten Befestigungsaufnahme 300 heraus bewegt werden kann.

Die Hintergreifkontur 343 und die Hintergreifkontur 344 erstrecken sich zwischen den Hintergreifkonturen 342. Die Hintergreifkontur 343 und die Hintergreifkontur 344 sind an einander entgegengesetzten Längsendbereichen des Grundkörpers 341 angeordnet.

Die Befestigungsaufnahmen 320 sind ebenfalls als Steckaufnahmen ausgestaltet. In eine jeweilige Befestigungsaufnahme 320 kann eine Befestigungseinrichtung 340 entlang einer Steckachse S320 eingesteckt werden oder aus der Befestigungsaufnahme 320 entlang der Steckachse S320 heraus bewegt werden.

Bezüglich der Befestigungsaufnahme 320 wirken die Hintergreifkonturen 343 und 344 der Befestigungseinrichtung 340 als Längsführungskonturen, die in Eingriff mit Längsführungskonturen oder Hintergreifkonturen 322 der Befestigungsaufnahme 320 gelangen können und die Befestigungseinrichtung 340 entlang der Steckachse S320 führen.

Eine der Hintergreifkonturen 342 der Befestigungseinrichtung 340, die in Steckrichtung bezüglich der Steckachse S320 vorn ist, schlägt an einem Anschlag 323 am Boden oder Ende der Befestigungsaufnahme 320 bezüglich der Steckachse S320 an. Dort kann optional eine Hintergreifkontur zur Aufnahme dieser Hintergreifkontur 342 vorgesehen sein. Dann kann auch ein Riegel 346 der Befestigungseinrichtung 340 in Eingriff mit einer Verriegelungskontur 324 eines Verriegelungselements 325 der Befestigungsaufnahme 320 gelangen, sodass die Befestigungseinrichtung 340 in der Befestigungsaufnahme 320 verriegelt ist.

Der Riegel 346 ist als federnde Zunge oder federndes Element bezüglich des Grundkörpers 341 ausgestaltet und weist eine Betätigungsfläche 345 auf, mit der er außer Eingriff mit der Verriegelungskontur 324 der Befestigungsaufnahme 320 gebracht werden kann, was durch einen Pfeil oder eine Betätigung BE2 in der Zeichnung angedeutet ist.

Die Befestigungseinrichtungen 340 weisen Gurtaufnahmen 347 für den Tragegurt 350 auf. Der Tragegurt 350 kann beispielsweise durch eine Durchstecköffnung 348 einer Gurtaufnahme 347 durchgesteckt werden und durch entsprechende Schlingenmaßnahmen an der Gurtaufnahme 347 reibschlüssig gehalten sein.

Die Befestigungsaufnahmen 320 des Behälteraufsatzes 200 befinden sich an den Längsseitenwänden 228 und 229 derart, dass der Tragegurt 340 den Aufnahmeraum 223 des Behälteraufsatzes 200 überbrückend in Eingriff mit den Befestigungsaufnahmen 320 bringbar ist. Somit kann der Stapel 9 sozusagen vom Tragegurt 350 nach unten hängen und bequem getragen werden.

Die Befestigungsaufnahmen 300 hingegen ermöglichen ein Tragen des Sauggeräts 10 in der Art einer Umhängetasche. Beispielsweise sind die Befestigungsaufnahme 300 an einer der Längsseitenwände 26, 27,28 oder 29, beim Ausführungsbeispiel konkret an der Längsseitenwand 26 angeordnet. Jedenfalls ist es vorteilhaft, wenn die Befestigungsaufnahmen 300 an Schmalseiten des Sauggerät-Gehäuses 20 angeordnet sind.

Vorteilhaft ist es, wenn die Befestigungsaufnahme 300 an Längsendbereichen der Längsseitenwand 26 angeordnet ist, also nahe bei den Längsseitenwänden 28 und 29, sodass der Tragegurt 350 einen mittleren Abschnitt der Längsseitenwand 26 als ein zum Umhängen an einer Schulter geeigneter Gurt oder Hand-Tragegriff dienen kann.

## Patentansprüche

1. Elektrisches Gerät, insbesondere in Gestalt eines Sauggeräts (10) oder einer Werkzeugmaschine, mit einem Gehäuse (20), in welchem mindestens ein elektrischer Verbraucher, insbesondere ein elektrischer Antriebsmotor (11D), angeordnet ist, wobei das elektrische Gerät zur elektrischen Stromversorgung des elektrischen Verbrauchers, insbesondere des Antriebsmotors (11D), eine Stromversorgungseinrichtung (80) mit einer Energiespeicher-Aufnahme (81) aufweist, in deren Innenraum mindestens zwei Geräte-Schnittstellen (90A, 90B) zum lösbaren Anschluss jeweils einer Energiespeicher-Schnittstelle (190A, 190B) eines elektrischen Energiespeichers (170A, 170B), insbesondere eines Akkupacks, angeordnet sind, **dadurch gekennzeichnet, dass** die Geräte-Schnittstellen (90A, 90B) an einander gegenüberliegenden Seitenwänden (83, 84) der Energiespeicher-Aufnahme (81) angeordnet sind, sodass die Energiespeicher (170A, 170B) mit einander zugewandten Bodenwänden (175) an den Geräte-Schnittstellen (90A, 90B) anordenbar sind.

2. Elektrisches Gerät nach Anspruch 1, **dadurch gekennzeichnet, dass** die Energiespeicher-Aufnahme (81) eine Einstecköffnung (82) aufweist, durch die die Energiespeicher (170A, 170B) in die Energiespeicher-Aufnahme (81) einsteckbar sind, wobei vorteilhaft vorgesehen ist, dass der Einstecköffnung (82) ein Boden der Energiespeicher-Aufnahme (81) gegenüberliegt.

3. Elektrisches Gerät nach einem der vorhergehenden Ansprüche, **dadurch gekennzeichnet, dass** die Energiespeicher-Aufnahme (81) als eine Tasche oder ein Fach an einer Außenwand des Gehäuses (20) ausgestaltet ist.

4. Elektrisches Gerät nach einem der vorhergehenden Ansprüche, **dadurch gekennzeichnet, dass** die Energiespeicher-Aufnahme (81) eine derartige Tiefe aufweist, dass die Energiespeicher (170A, 170B) nicht oder nur zu maximal 10% ihrer Länge vor die Energiespeicher-Aufnahme (81) und/oder eine Außenkontur des Gehäuses (20) vorstehen, wenn die Energiespeicher (170A, 170B) in der Energiespeicher-Aufnahme (81) aufgenommen sind.

5. Elektrisches Gerät nach einem der vorhergehenden Ansprüche, **dadurch gekennzeichnet, dass** die Geräte-Schnittstellen (90A, 90B) Längsführungskonturen (91) zum führenden Eingriff von Längsführungskonturen (191) der Energiespeicher-Schnittstellen (190A, 190B) entlang von Steckachsen (SA) aufweisen und/oder dass die Geräte-Schnittstellen (90A, 90B) Rasteinrichtungen (92) zum Verrasten von Rasteinrichtungen (192) der Energiespeicher-Schnittstellen (190A, 190B) umfassen.

6. Elektrisches Gerät nach einem der vorhergehenden Ansprüche, **dadurch gekennzeichnet, dass** die Energiespeicher-Aufnahme (81) sich zwischen den einander gegenüberliegenden Seitenwänden (83, 84) erstreckende Verbindungswände (85, 86) aufweisen, die einen Innenraum zur Aufnahme der Energiespeicher (170A, 170B) begrenzen.

7. Elektrisches Gerät nach Anspruch 6, **dadurch gekennzeichnet, dass** zwischen mindestens einer Verbindungswand (85, 86) und dem diesem gegenüberliegenden Energiespeicher (170A, 170B), wenn der Energiespeicher (170A, 170B) in der Energiespeicher-Aufnahme (81) aufgenommen ist, ein Bedienraum (88, 89) zum Ergreifen des Energiespeichers (170A, 170B) vorgesehen ist, wobei vorteilhaft vorgesehen ist, dass der Bedienraum (88, 89) eine ein einem Finger einer erwachsenen Person aufweisende Breite und/oder eine Breite von mindestens 1,5 cm, vorzugsweise mindestens 2 cm, aufweist und/oder dass sich der Bedienraum (88, 89) durchgängig zwischen den Seitenwänden (83, 84) der Energiespeicher-Aufnahme (81) erstreckt.

8. Elektrisches Gerät nach Anspruch 6 oder 7, **dadurch gekennzeichnet, dass** zwischen jeder Verbindungswand (85, 86) und dem ihr gegenüberliegenden Energiespeicher (170A, 170B) ein Bedienraum (88, 89) angeordnet ist, durch den der Energiespeicher (170A, 170B) an einander entgegengesetzten Längsseiten (172A) klammerartig ergreifbar ist, wenn der Energiespeicher (170A, 170B) in der Energiespeicher-Aufnahme (81) aufgenommen ist.

9. Elektrisches Gerät nach einem der vorhergehenden Ansprüche, **dadurch gekennzeichnet, dass** der Energiespeicher (170A, 170B) an mindestens einer Längsseite (172A), die in die Energiespeicher-Aufnahme (81) eingreift, wenn der Energiespeicher (170A, 170B) in der Energiespeicher-Aufnahme (81) aufgenommen ist, ein Bedienelement (197) aufweist, durch dessen Betätigung der Energiespeicher (170A, 170B) von der Geräte-Schnittstelle (90A, 90B) in der Energiespeicher-Aufnahme (81) lösbar ist.

10. Elektrisches Gerät nach Anspruch 9, **dadurch gekennzeichnet, dass** das Bedienelement (197) durch Eingreifen in einen Bedienraum (88, 89) der Energiespeicher-Aufnahme (81) zwischen der Verbindungswand (85, 86) und dem Energiespeicher (170A, 170B) betätigbar ist und/oder dass der Energiespeicher (170A, 170B) an einander entgegengesetzten Längsseiten (172A) jeweils ein Bedienelement (197) aufweist.

11. Elektrisches Gerät nach einem der vorhergehenden Ansprüche, **dadurch gekennzeichnet, dass** die mindestens zwei Energiespeicher (170A, 170B) umfasst oder aufweist und/oder einen Bestandteil eines Systems bildet, welches das elektrische Gerät und mindestens zwei Energiespeicher (170A, 170B) umfasst.

12. Elektrisches Gerät nach einem der vorhergehenden Ansprüche, **dadurch gekennzeichnet, dass** das Gehäuse (20) ein Sauggerät-Gehäuse (20) bildet, in dessen Innenraum (23) eine Saugturbine (11) zur Erzeugung eines Saugstroms (S) angeordnet ist, wobei das Sauggerät-Gehäuse (20) einen Saugeinlass (12) zum Einlassen des Saugstroms (S) und einen Staubsammelraum (21) zum Sammeln von in dem Saugstrom (S) enthaltenen Staub aufweist, wobei zwischen dem Staubsammelraum (21) und einer Saugturbine-Einströmöffnung (11A) der Saugturbine (11) ein Filterelement (13) zum Zurückhalten von Staub in dem Staubsammelraum (21) angeordnet ist.

13. Elektrisches Gerät nach einem der vorhergehenden Ansprüche, **dadurch gekennzeichnet, dass** das Gehäuse (20) als ein zur Bildung eines in Richtung einer Stapelachse (SR) erstreckenden Gehäusestapels (9) ausgebildetes Stapelgehäuse (20A) ausgestaltet ist, unter welches mindestens ein Stapelbehälter (200A) unterstapelbar und/oder auf welches mindestens ein Stapelbehälter (200A) aufstapelbar ist.

14. Elektrisches Gerät nach Anspruch 13, **dadurch gekennzeichnet, dass** es Koppelmittel (58) zum Koppeln seines Gehäuses mit einem entlang der Stapelachse (SR) aufgestapelten oder untergestapelten Stapelbehälter (200A) aufweist, wobei die Koppelmittel (58) des elektrischen Geräts das Gehäuse (20) zur Zusammenwirkung mit Koppelmitteln (58) des Stapelbehälters (200A) ausgestaltet sind, sodass das Gehäuse (20) mit dem Stapelbehälter (200A) quer zur Stapelachse (SR) und parallel zur Stapelachse (SR) anhand der Koppelmittel (58) fest verbunden ist, und/oder dass es einen Behälteraufsatz (200) aufweist, der entlang der Stapelachse (SR) als ein Stapelbehälter (200A) auf das Gehäuse (20) aufstapelbar oder unter das Gehäuse (20) unterstapelbar ist, wobei der Behälteraufsatz (200) und das Gehäuse (20) die Koppelmittel (58) zum festen Koppeln des Gehäuses (20) mit dem Behälteraufsatz (200) parallel und quer zur Stapelachse (SR) aufweisen, und wobei der Behälteraufsatz (200) einen Aufnahmeraum für mindestens eine Komponente, insbesondere einen Saugschlauch (SL), des elektrischen Geräts aufweist..

15. Elektrisches Gerät nach einem der vorhergehenden Ansprüche, **dadurch gekennzeichnet, dass** es ein mobiles elektrisches Gerät ist.

## Claims

1. An electrical device, in particular in the form of a suction device (10) or a machine tool, with a housing (20) in which at least one electrical load, in particular an electric drive motor (11D), is arranged, the electrical device for the electrical power supply of the electrical load, in particular the drive motor (11D), having a power supply unit (80) with an energy storage receptacle (81), in the interior of which at least two device interfaces (90A, 90B) for the detachable connection of one energy storage interface (190A, 190B) of an electrical energy storage (170A, 170B), in particular a battery pack, are arranged, **characterized in that** the device interfaces (90A, 90B) are arranged on opposite side walls (83, 84) of the energy storage receptacle (81), so that the energy storages (170A, 170B) can be arranged with bottom walls (175) facing one another at the device interfaces (90A, 90B).

2. The electrical device of claim 1, **characterized in that** the energy storage receptacle (81) has plug-in opening (82) through which the energy storage devices (170A, 170B) can be plugged into the energy storage receptacle (81), wherein it is advantageously provided that the plug-in opening (82) is opposite a bottom of the energy storage receptacle (81).

3. The electrical device of one of the preceding claims, **characterized in that** the energy storage receptacle (81) is configured as a pocket or a compartment on an outer wall of the housing (20).

4. The electrical device of one of the preceding claims, **characterized in that** the energy storage receptacle (81) has such a depth that the energy storages (170A, 170B) do not project or project by a maximum of 10% of their length in front of the energy storage receptacle (81) and/or an outer contour of the housing (20) when the energy storages (170A, 170B) are received in the energy storage receptacle (81).

5. The electrical device of one of the preceding claims, **characterized in that** the device interfaces (90A, 90B) have longitudinal guide contours (91) for guiding engagement of longitudinal guide contours (191) of the energy storage interfaces (190A, 190B) along plug-in axes (SA) and/or **in that** the device interfaces (90A, 90B) comprise latching devices (92) for latching latching devices (192) of the energy storage interfaces (190A, 190B).

6. The electrical device of one of the preceding claims, **characterized in that** the energy storage receptacle (81) has connecting walls (85, 86) which extend between the opposite side walls (83, 84) and which have an interior space for receiving the energy storage (170A, 170B).

7. The electrical device of claim 6, **characterized in that** between at least one connecting wall (85, 86) and the opposite energy storage (170A, 170B), when the energy storage (170A, 170B) is received in the energy storage receptacle (81), an operating space (88, 89) for grasping the energy storage (170A, 170B) is provided, wherein it is advantageously provided that the operating space (88, 89) has a width corresponding to a finger of an adult and/or a width of at least 1.5 cm, preferably at least 2 cm, and/or **in that** the operating space (88, 89) extends continuously between the side walls (83, 84) of the energy storage receptacle (81).

8. The electrical device of one of claims 6 or 7, **characterized in that** between each connecting wall (85, 86) and the opposite energy storage (170A, 170B) there is an operating space (88, 89) through which the energy storage (170A, 170B) can be grasped in the manner of a clamp on opposite longitudinal sides (172A) when the energy storage (170A, 170B) is received in the energy storage receptacle (81).

9. The electrical device of one of the preceding claims, **characterized in that** the energy storage (170A, 170B) has an operating element (197) on at least one longitudinal side (172A) which engages in the energy storage receptacle (81) when the energy storage (170A, 170B) is received in the energy storage receptacle (81), wherein, when said operating element is actuated, the energy storage (170A, 170B) is detachable from the device interface (90A, 90B) in the energy storage receptacle (81).

10. The electrical device of claim 9, **characterized in that** the operating element (197) can be actuated by engaging in an operating space (88, 89) of the energy storage receptacle (81) between the connecting wall (85, 86) and the energy storage (170A, 170B) and/or **in that** the energy storage (170A, 170B) has one operating element (197) each on opposite longitudinal sides (172A).

11. The electrical device of one of the preceding claims, **characterized in that** it comprises or has the at least two energy storages (170A, 170B) and/or forms part of a system which comprises the electrical device and at least two energy storages (170A, 170B).

12. The electrical device of one of the preceding claims, **characterized in that** the housing (20) forms a suction device housing (20) in the interior (23) of which a suction turbine (11) for generating a suction flow (S) is arranged, wherein the suction device housing (20) has a suction inlet (12) for letting in the suction flow (S), and a dust collection chamber (21) for collecting dust contained in the suction flow (S), wherein between the dust collection chamber (21) and a suction turbine inflow opening (11A) of the suction turbine (11) a filter element (13) for retaining dust is arranged in the dust collection chamber (21).

13. The electrical device of one of the preceding claims, **characterized in that** the housing (20) is configured as a stack housing (20A) designed to form a housing stack (9) extending in the direction of a stack axis (SR), underneath of which at least one stacking container (200A) can be stacked and/or atop of which at least one stacking container (200A) can be stacked.

14. The electrical device of claim 13, **characterized in that** it has coupling means (58) for coupling its housing to a stack container (200A) stacked atop or underneath it along the stacking axis (SR), the coupling means (58) of the electrical device the housing (20) are configured to interact with coupling means (58) of the stacking container (200A), so that the housing (20) is firmly connected to the stacking container (200A) transversely to the stacking axis (SR) and parallel to the stacking axis (SR) using the coupling means (58), and/or **in that** it has a container attachment (200) which can be stacked along the stacking axis (SR) as a stacking container (200A) atop the housing (20) or underneath the housing (20), wherein the container attachment (200) and the housing (20) have the coupling means (58) for firmly coupling the housing (20) to the container attachment (200) parallel and transverse to the stacking axis (SR), and wherein the container attachment (200) has a receiving space for at least one component, in particular a suction hose (SL), of the electrical device.

15. The electrical device of one of the preceding claims, **characterized in that** it is a mobile electrical device.

## Revendications

1. Appareil électrique, en particulier sous la forme d'un aspirateur (10) ou d'une machine-outil, avec un boîtier (20), dans lequel au moins un consommateur électrique, en particulier un moteur d'entraînement (11D) électrique, est agencé, dans lequel l'appareil électrique présente pour l'alimentation électrique du consommateur électrique, en particulier du moteur d'entraînement (11D), un appareil d'alimentation électrique (80) avec un logement d'accumulateur d'énergie (81), dans l'espace intérieur duquel au moins deux interfaces d'appareil (90A, 90B) sont agencées pour le raccordement amovible respectivement d'une interface d'accumulateur d'énergie (190A, 190B) d'un accumulateur d'énergie électrique (170A, 170B), en particulier d'un bloc batterie, **caractérisé en ce que** les interfaces d'appareil (90A, 90B) sont agencées au niveau de parois latérales (83, 84) opposées l'une à l'autre du logement d'accumulateur d'énergie (81) de sorte que les accumulateurs d'énergie (170A, 170B) puissent être agencés avec des parois de fond (175) tournés l'une vers l'autre au niveau des interfaces d'appareil (90A, 90B).

2. Appareil électrique selon la revendication 1, **caractérisé en ce que** le logement d'accumulateur d'énergie (81) présente une ouverture d'enfichage (82), à travers laquelle les accumulateurs d'énergie (170A, 170B) peuvent être enfichés dans le logement d'accumulateur d'énergie (81), dans lequel il est avantageusement prévu qu'un fond du logement d'accumulateur d'énergie (81) fasse face à l'ouverture d'enfichage (82).

3. Appareil électrique selon l'une quelconque des revendications précédentes, **caractérisé en ce que** le logement d'accumulateur d'énergie (81) est configuré en tant que poche ou compartiment au niveau d'une paroi extérieure du boîtier (20).

4. Appareil électrique selon l'une quelconque des revendications précédentes, **caractérisé en ce que** le logement d'accumulateur d'énergie (81) présente une profondeur telle que les accumulateurs d'énergie (170A, 170B) ne dépassent pas ou seulement à 10 % au maximum de leurs longueurs du logement d'accumulateur d'énergie (81) et/ou d'un contour extérieur du boîtier (20) lorsque les accumulateurs d'énergie (170A, 170B) sont reçus dans le logement d'accumulateur d'énergie (81).

5. Appareil électrique selon l'une quelconque des revendications précédentes, **caractérisé en ce que** les interfaces d'appareil (90A, 90B) présentent des contours de guidage longitudinal (91) pour la prise de guidage de contours de guidage longitudinal (191) des interfaces d'accumulateur d'énergie (190A, 190B) le long d'axes d'enfichage (SA) et/ou que les interfaces d'appareil (90A, 90B) comprennent des appareils d'encliquetage (92) pour l'encliquetage d'appareils d'encliquetage (192) des interfaces d'accumulateur d'énergie (190A, 190B).

6. Appareil électrique selon l'une quelconque des revendications précédentes, **caractérisé en ce que** le logement d'accumulateur d'énergie (81) présente des parois de liaison (85, 86) s'étendant entre les parois latérales (83, 84) opposées l'une à l'autre qui délimitent un espace intérieur pour la réception des accumulateurs d'énergie (170A, 170B).

7. Appareil électrique selon la revendication 6, **caractérisé en ce qu'**un espace de commande (88, 89) est prévu entre au moins une paroi de liaison (85, 86) et l'accumulateur d'énergie (170A, 170B) opposé à celle-ci lorsque l'accumulateur d'énergie (170A, 170B) est reçu dans le logement d'accumulateur d'énergie (81), pour saisir l'accumulateur d'énergie (170A, 170B), dans lequel il est avantageusement prévu que l'espace de commande (88, 89) présente une largeur présentant un doigt d'une personne adulte et/ou une largeur d'au moins 1,5 cm, de préférence d'au moins 2 cm et/ou que l'espace de commande (88, 89) s'étend en continu entre les parois latérales (83, 84) du logement d'accumulateur d'énergie (81).

8. Appareil électrique selon la revendication 6 ou 7, **caractérisé en ce qu'**un espace de commande (88, 89) est agencé entre chaque paroi de liaison (85, 86) et l'accumulateur d'énergie (170A, 170B) opposé à celle-ci, par lequel l'accumulateur d'énergie (170A, 170B) peut être saisi comme une pince au niveau de côtés longitudinaux (172A) opposés l'un à l'autre, lorsque l'accumulateur d'énergie (170A, 170B) est reçu dans le logement d'accumulateur d'énergie (81).

9. Appareil électrique selon l'une quelconque des revendications précédentes, **caractérisé en ce que** l'accumulateur d'énergie (170A, 170B) présente au niveau d'au moins un côté longitudinal (172A) qui vient en prise dans le logement d'accumulateur d'énergie (81) lorsque l'accumulateur d'énergie (170A, 170B) est reçu dans le logement d'accumulateur d'énergie (81), un élément de commande (197), par l'actionnement duquel l'accumulateur d'énergie (170A, 170B) peut être détaché de l'interface d'appareil (90A, 90B) dans le logement d'accumulateur d'énergie (81).

10. Appareil électrique selon la revendication 9, **caractérisé en ce que** l'élément de commande (197) est actionnable par saisie dans un espace de commande (88, 89) du logement d'accumulateur d'énergie (81) entre la paroi de liaison (85, 86) et l'accumulateur d'énergie (170A, 170B) et/ou que l'accumulateur d'énergie (170A, 170B) présente au niveau de côtés longitudinaux (172A) opposés l'un à l'autre respectivement un élément de commande (197).

11. Appareil électrique selon l'une quelconque des revendications précédentes, **caractérisé en ce que** les au moins deux accumulateurs d'énergie (170A, 170B) comprennent ou présentent et/ou forment un constituant d'un système qui comprend l'appareil électrique et au moins deux accumulateurs d'énergie (170A, 170B).

12. Appareil électrique selon l'une quelconque des revendications précédentes, **caractérisé en ce que** le boîtier (20) forme un boîtier d'aspirateur (20), dans l'espace intérieur (23) duquel une turbine d'aspiration (11) est agencée pour la génération d'un courant d'aspiration (S), dans lequel le boîtier d'aspirateur (20) présente une entrée d'aspiration (12) pour l'entrée du courant d'aspiration (S) et un espace de collecte de poussières (21) pour la collecte de poussières contenues dans le courant d'aspiration (S), dans lequel un élément filtrant (13) est agencé pour la retenue de poussières dans l'espace de collecte de poussières (21) entre l'espace de collecte de poussières (21) et une ouverture d'afflux de turbine d'aspiration (11A) de la turbine d'aspiration (11).

13. Appareil électrique selon l'une quelconque des revendications précédentes, **caractérisé en ce que** le boîtier (20) est configuré comme un boîtier d'empilement (20A) réalisé pour la formation d'un empilement de boîtier (9) s'étendant en direction d'un axe d'empilement (SR), sous lequel au moins un récipient d'empilement (200A) peut être empilé et/ou sur lequel au moins un récipient d'empilement (200A) peut être empilé.

14. Appareil électrique selon la revendication 13, **caractérisé en ce qu'**il présente des moyens de couplage (58) pour le couplage de son boîtier avec un récipient d'empilement (200A) empilé dessus ou dessous le long de l'axe d'empilement (SR), dans lequel les moyens de couplage (58) de l'appareil électrique le boîtier (20) sont configurés pour la coaction avec des moyens de couplage (58) du récipient d'empilement (200A) de sorte que le boîtier (20) soit relié de façon fixe au récipient d'empilement (200A) transversalement à l'axe d'empilement (SR) et parallèlement à l'axe d'empilement (SR) à l'aide des moyens de couplage (58), et/ou qu'il présente un chapeau de récipient (200) qui peut être empilé le long de l'axe d'empilement (SR) en tant que récipient d'empilement (200A) sur le boîtier (20) ou peut être empilé sous le boîtier (20), dans lequel le chapeau de récipient (200) et le boîtier (20) présentent les moyens de couplage (58) pour le couplage fixe du boîtier (20) avec le chapeau de récipient (200) parallèlement et transversalement à l'axe d'empilement (SR), et dans lequel le chapeau de récipient (200) présente un espace de réception pour au moins un composant, en particulier un tuyau d'aspiration (SL), de l'appareil électrique.

15. Appareil électrique selon l'une quelconque des revendications précédentes, **caractérisé en ce qu'**il est un appareil électrique mobile.
